# EUROPEAN PATENT SPECIFICATION

(11) **EP 1 980 779 B1**
(45) Date of publication and mention of the grant of the patent: **07.05.2014**
(21) Application number: 07713717.2
(22) Date of filing: 30.01.2007
(51) Int. Cl.: F25B 1/00, F16L 9/08, F16L 19/10, F25B 41/00, F16L 19/14, F16L 9/10, F16L 9/14

(54) **BITE TYPE TUBE CONNECTION STRUCTURE**
VERZAHNTE ROHRVERBINDUNGSSTRUKTUR
STRUCTURE DE RACCORDEMENT DE TUBES A FERRULE

(30) Priority: 31.01.2006 JP 2006023473; 29.01.2007 JP 2007018244
(43) Date of publication of application: 15.10.2008
(73) Proprietor: DAIKIN INDUSTRIES, LTD., Osaka-shi, Osaka 530-8323 (JP)
(72) Inventor: NAKATA, Haruo, Sakai-shi, Osaka 5918511 (JP); NAKAYA, Tsukasa, Sakai-shi, Osaka 5918511 (JP); SHIMAMURA, Takashi, Sakai-shi, Osaka 5918511 (JP)
(74) Representative: Goddar, Heinz J.
(86) International application number: PCT/JP2007/051462
(87) International publication number: WO 2007/088840

(56) References cited:
- WO-A2-02/063195
- JP-A- 11 030 368
- JP-A- 52 085 709
- JP-A- 60 151 495
- JP-A- 2003 526 064
- JP-A- 2004 308 689
- JP-A- 2004 308 689
- JP-A- 2005 221 013
- JP-A- 2005 257 127
- JP-U- 51 007 717
- JP-Y1- 45 001 814
- US-A1- 2003 020 278

## Description

### TECHNICAL FIELD

The present invention relates to a bite type tube connection structure and a tube fitting, a valve, a closing valve, a refrigerating cycle device, a hot-water supply device, a bite type tube connection method and an on-site tube connection method, each of which uses this bite type tube connection structure. In particular, the present invention relates to an increase in the ease of work in the case where a bite type tube connection structure is adopted.

### BACKGROUND ART

In general, tube fittings are removable so that tubes for fluid can be easily replaced and repaired. Tube fittings have a variety of structures in accordance with applications.

In the refrigerating cycle device of conventional air conditioners, for example, flair type tube fittings have been used as tube fittings. From the point of view of environmental protection in recent years, hydrocarbon (HC) refrigerants such as propane, ethane, ethylene, n-pentane, n-butane and isobutane, each of which is combustible, as well as natural refrigerants such as carbon dioxide which is used under high pressure tend to be used in refrigerating cycle devices instead of chlorofluorocarbon which is a conventional refrigerant. In refrigeration cycle devices using these refrigerants, bite type tube fittings where there is a small leakage of refrigerant are used for the connection of tubes through which a high pressure fluid flows. These types of tube fittings are disclosed, for example, in Patent Documents 1 and 2. A refrigerating cycle device indicates all devices operated in a refrigeration cycle, such as air conditioners, dehumidifiers, heat pump type hot-water supply devices, refrigerators, freezing devices, and cooling devices for a manufacturing process each of which is cited as an example.

Fig. 19 shows a bite type tube fitting disclosed in Patent Document 1. As shown in Fig. 19, the bite type tube fitting is provided with a join main body 201, a fastening nut 202 which is a fastening part and a bite type sleeve 203 in cylindrical form. A tube connection opening 211 into which an end portion of a connection tube 204 is inserted is created in the fitting main body 201. An external thread 212 for threading into the fastening nut 202 is provided around the exterior surface of the fitting main body 201. A tapered guiding surface 213 is formed in an end portion of the tube connection opening 211. This tapered surface 213 guides the end portion of the bite type sleeve 203 which is close to the fitting main body 201 (front end portion) toward the center axis of the connection tube 204 when the bite type sleeve 203 is pressed and inserted into the tube connection opening 211.

A through hole 222 through which the connection tube 204 is inserted is provided in the sidewall 221 of the fastening nut 202. A pressing tapered surface 223 for pressing the end portion of the bite type sleeve 203 which is close to the fastening nut 202 (rear end portion) is formed on the fastening nut 202 in the vicinity of the through hole 222. An internal thread 225 which is threaded around the external thread 212 is provided on the internal surface of the fastening nut 202. The bite type sleeve 203 is in cylindrical form and placed between the fitting main body 201 and the fastening nut 202. The bite type sleeve 203 has a through hole 231 through which the connection tube 204 is inserted. A pressure receiving tapered surface 232 with which the pressing tapered surface 223 of the fastening nut 202 makes contact is formed in the rear end portion of the bite type sleeve 203. A pressing force is applied to the pressure receiving tapered surface 232 from the fastening nut 202 in the axial direction. The front end portion of the bite type sleeve 203 makes contact with the tapered guiding surface 213.

A method for assembling the bite type tube fitting that is configured as described above is described below.

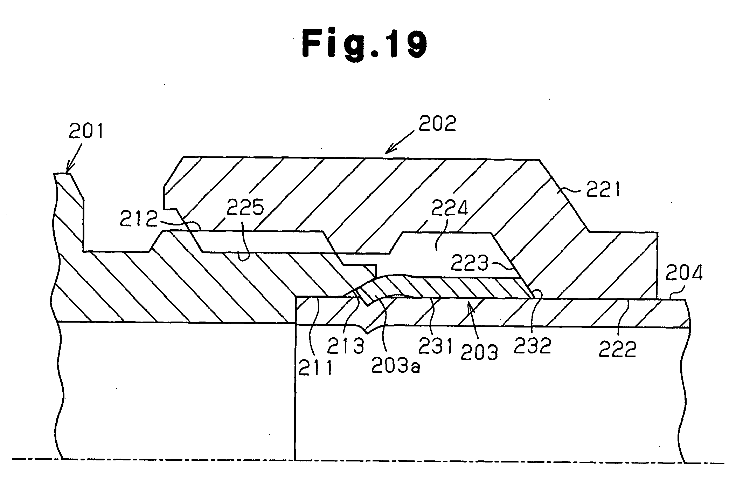

First, an end portion of the connection tube 204 is inserted into the through hole 222 of the fastening nut 202 and the though hole 231 of the bite type sleeve 203 so that the fastening nut 202 and the bite type sleeve 203 are combined with the connection tube 204. Next, the end portion of the connection tube 204 is inserted into the tube connection opening 211 so as to be engaged with the fitting main body 201. At this time the front end portion of the bite type sleeve 203 is placed so as to face the tapered guiding surface 213 in the fitting main body 201. Subsequently, the internal thread 225 of the fastening nut 202 is threaded to the external thread 212 of the fitting main body 201 and the fastening nut 202 is fastened to the fitting main body 201 with a predetermined torque using a fastening tool. When the fastening nut 202 is threaded to the fitting main body 201, the distal end portion 203a of the bite type sleeve 203 is pressed against the tapered guiding surface 213 by means of the fastening nut 202. In addition, the distal end portion 203a of the bite type sleeve 203 is pressed and bent toward the center axis of the connection tube 204 by means of the tapered guiding surface 213. As a result, the distal end portion 203a of the bite type sleeve 203 bites into the connection tube 204, and therefore, the connection tube 204 is prevented from being removed from the bite type sleeve 203, and the gap between the bite type sleeve 203 and the connection tube 204 is sealed. In addition, since the front end surface of the bite type sleeve 203 is pressed against the tapered guiding surface 213, the gap between the bite type sleeve 203 and the fitting main body 201 is also sealed. Such a high sealing performance is gained through use of the bite type tube fitting. Fig. 19 shows the fastening nut 202 in such a state as being fastened to the fitting main body 201.
[Patent Document 1] Japanese Laid-Open Patent Publication 2003-74768
[Patent Document 2] Japanese Laid-Open Patent Publication 2005-36947

US 2003/0020278 A1 and JP 2004-308689 refer to connection structures according to the first part of claims 1 and 2.

### DISCLOSURE OF THE INVENTION

In the case where a conventional bite type tube fitting is used, the connection tube 204 cannot be held in a predetermined position while the bite type sleeve 203 is biting into the connection tube 204, when the fastening nut 202 is fastened using a fastening tool. Therefore, it is necessary for the worker to fasten the connection tube 204 while holding the connection tube 204. This problem arises in the same manner with tube fittings used for any device other than the refrigerating cycle device of air conditioners and the like.

An objective of the present invention is to provide a bite type tube connection structure which temporarily holds a connection tube easily so that the ease of work is increased when a part is fastened. Another objective of the invention is to provide a tube fitting, a valve, a closing valve, a refrigerating cycle device, a bite type tube connection method, and an on-site tube connection method, each of which uses the bite type tube connection structure.

In order to solve the above described problem, a first aspect of the present invention provides a bite type tube connection structure according to claim 1. This connection structure is provided with a main body of a fitting having a tube connection opening through which a connection tube is inserted, a fastening part which is fastened to the fitting main body, and a bite type sleeve in cylindrical form provided between the fitting main body and the fastening part. The bite type sleeve is provided with a primary deforming portion which either bites into the connection tube through a first pressing force applied in the axial direction when the fastening part is fastened or is inserted in a wedge-like fashion between the connection tube and the fitting main body, and a secondary deforming portion that bites into the connection tube through a second pressing force in the axial direction which is greater than the first pressing force applied when the fastening part is fastened.

A second aspect of the invention provides a bite type tube connection structure according to claim 2.

In the above described configurations, first, the connection tube is fitted into the fastening part and the bite type sleeve. Next, an end portion of the connection tube is inserted into the tube connection opening of the fitting main body so that the bite type sleeve is placed in a predetermined location. Next, the fastening part is fastened to the fitting main body while the connection tube is held in a predetermined location. The first pressing force applied at this time makes the primary deforming portion of the bite type sleeve either bite into the connection tube or be inserted between the fitting main body and the connection tube in a wedge-like fashion, and therefore the connection tube is temporarily held against the fitting main body. Next, the fastening part is fastened to the fitting main body in a stronger fashion using a fastening tool. The primary deforming portion is inserted more deeply between the fitting main body and the connection tube by means of a second pressing force which is greater than the first pressing force applied at this time, and at the same time, the distal end portion of the secondary deforming portion of the bite type sleeve is deformed and bites into the connection tube. As a result, the connection tube is connected to the fitting main body in such a manner that no fluid leaks to the outside. Accordingly, the work to fasten the fastening part is easier to carry out.

In the above described bite type tube connection structure, it is preferable for the thickness of the primary deforming portion to be less than that of the end of the secondary deforming portion. The bite type sleeve is pressed toward the center axis of the connection tube by the tapered guiding surface. In this case, the primary deforming portion is thinner than the end portion of the secondary deforming portion and is easier to deform. Therefore, the primary deforming portion is bent toward the center axis of the connection tube at a stage where a force starts being applied to the bite type sleeve and bites into the connection tube so that the connection tube is temporarily held in place.

In the above described bite type tube connection structure, it is preferable for the thickness of the primary deforming portion to be less than the end of the secondary deforming portion, and for the thickness of at least a portion of the primary deforming portion to be greater than the gap between the fitting main body and the connection tube. In this case, the thick portion of the primary deforming portion functions as a wedge between the fitting main body and the connection tube. Prior to this, the bite type sleeve is pressed by the tapered guiding surface, and thus, the primary deforming portion can be inserted between the fitting main body and the connection tube in a wedge-like fashion while the primary deforming portion is biting into the connection tube.

In the above described bite type tube connection structure, it is preferable for the bite type sleeve to have a hardness which is equal to or greater than that of the connection tube. In this case, the function of the primary deforming portion, which is to temporarily hold the connection tube, and the function of the secondary deforming portion, which is to bite into the connection tube, are ensured.

In the above described bite type tube connection structure, the fitting main body has a thread with which a fastening part is threaded, and the fastening part is a fastening nut which is threaded to the fitting main body. The first pressing force is a pressing force in the axial direction which is applied when the fastening nut is fastened by hand, and the second pressing force is a pressing force in the axial direction which is applied when the fastening nut is fastened using a fastening tool, and greater than the first pressing force. In this case, the connection tube is temporarily held with the first pressing force applied when the fastening nut is fastened by hand. After the connection tube is temporarily held, the primary deforming portion is inserted more deeply into the connection tube with the second pressing force applied when the fastening nut is fastened with a predetermined torque using a fastening tool, such as a wrench, and at the same time, the distal end portion of the secondary deforming portion deforms and bites into the connection tube. As a result, the connection tube is connected to the fitting main body in such a manner that no fluid leaks out. Accordingly, the operation of fastening the fastening nut using a tool can be easily carried out.

In the above described bite type tube connection structure of the first aspect, the bite type sleeve is formed integrally with the fastening nut, and it is preferable for the secondary deforming portion to be separated from the fastening nut through the pressing force applied from the fastening nut in the axial direction before biting into the connection tube. In this case, since the bite type sleeve is formed integrally with the fastening nut, the number of parts is reduced and the cost for manufacture is reduced. In addition, it is not necessary for the bite type sleeve to be fitted into the connection tube or engaged with the tube connection opening, and thus, the ease of work further increases.

In the above described bite type tube connection structure, it is preferable for the primary deforming portion to be formed integrally with a distal end portion of the secondary deforming portion, for the secondary deforming portion to be linked to the inner wall of the fastening nut via a thin linking portion, and for the bite type sleeve to be formed integrally with the fastening nut. In this case, the bite type sleeve can be separated from the fastening nut when the fastening nut is fastened. In addition, the fastening nut can bite into the connection tube without rotating the bit type sleeve. Accordingly, the sealing performance increases in the connection portion of the tube.

In the above described bite type tube connection structure of the second aspect, the bite type sleeve is formed integrally with the fitting main body and separated from the fitting main body through the pressing force from the fastening nut in the axial direction before the secondary deforming portion bites into the connection tube. In this case, since the bite type sleeve is formed integrally with the fitting main body, the number of parts is reduced and the cost of manufacture is reduced. In addition, it is not necessary for the bite type sleeve to be fitted into the connection tube or engaged in the tube connection opening, and thus, the ease of work further increases.

In the above described bite type tube connection structure, it is preferable for the primary deforming portion to be formed integrally with the distal end portion of the secondary deforming portion, and for the secondary deforming portion to be joined to a joint surface which is substantially parallel to the center of the axis of the bite type sleeve in the vicinity of the tube connection opening of the fitting main body. In this case, the bite type sleeve can be separated from the fitting main body when the fastening nut is fastened by hand. Adhesion and engagement can be cited as examples of the joining method. The bite type sleeve is integrated with the fitting main body in such a state as to be exposed from the fitting main body, and therefore, care is required during handling.

In the above described bite type tube connection structure, it is preferable for a thin portion to be formed in the border portion between the primary deforming portion and the secondary deforming portion. In this case, the distal end portion of the secondary deforming portion of the bite type sleeve easily deforms and can bite into the connection tube while the primary deforming portion being inserted between the fitting main body and connection tube is prevented from affecting the connection. During the fastening operation, the primary deforming portion may be or does not need to be separated from the secondary deforming portion.

In the above described bite type tube connection structure, it is preferable for the thickness of the thin portion to be less than that at the distal end of the primary deforming portion. In this case, the primary deforming portion can be temporarily held against the connection tube with ease through the first pressing force applied when the fastening nut is fastened by hand.

In the above described bite type tube connection structure, it is preferable for a tapered guiding surface which guides the distal end portion of the secondary deforming portion toward the center axis of the connection tube to be provided in the vicinity of the tube connection opening in the fitting main body, and for the bite type sleeve to have a tapered surface which makes contact with the tapered guiding surface, a through hole into which the connection tube is inserted, and a notch provided in the border portion between the secondary deforming portion and the primary deforming portion, so that the notch forms a thin portion between the primary deforming portion and the secondary deforming portion. In this case, the notch for forming the thin portion is easy to machine. In addition, since a corner portion is formed in the distal end portion of the secondary deforming portion, the secondary deforming portion can easily bite into the connection tube, because of the corner portion.

In the above described bite type tube connection structure, it is preferable for the notch to have such a form that the distal end is tapered in a longitudinal cross section. In this case, even a small notch can easily deform the primary deforming portion. Therefore, the bite type sleeve is made shorter, and as a result, the size of the bite type connection structure is reduced.

In the above described bite type tube connection structure, it is preferable for the notch to have such a form as to be a substantially right triangle in a longitudinal cross section, and for the surface of the notch close to the secondary deforming portion to be perpendicular to the center axis of the bite type sleeve. In this case, the biting portion located at the distal end of the secondary deforming portion forms a right angle. Accordingly, it becomes easy for the primary deforming portion to be temporarily held against the connection tube, and for the secondary deforming portion to bite into the connection tube.

In order to solve the above described problem, another aspect of the present invention provides a tube fitting. This tube fitting is provided with at least two tube connection portions which extend in different directions, and the above described bite type tube connection structure is used in one of these tube connection portions. In this case, fluid is prevented from leaking from the tube connection portion, and the ease of work when connecting tubes increases.

It is preferable for the above described tube fitting to be provided with two tube connection portions which extend in different directions, for one of the two tube connection portions to be connected to a connection tube in the above described bite type tube connection structure, and for the other of the two tube connection portions to be connected to a tube through brazing. This is appropriate in the case where a tube is removably connected to one of the tube connection portions.

It is preferable for the above described tube fitting to be provided with two tube connection portions which extend in different directions, and for a connection tube to be connected to the two tube connection portions in the above described bite type tube connection structure. This is appropriate in the case where a tube is removably connected to the two tube connection portions.

It is preferable for connection tubes of different diameters to be connected to the two tube connection portions which extend in different directions in the above described tube fitting. This is appropriate in the case where tubes having different diameters are connected.

In order to solve the above described problem, another aspect refers to a valve. This valve is provided with at least one tube connection portion, and the tube connection portion uses the above described bite type tube connection structure. In this case, leakage from the tube connection portion is prevented, and the ease of work when connecting tubes increases.

In order to solve the above described problem, another aspect refers to a closing valve. This closing valve is provided with at least one tube connection portion, and the above described bite type tube connection structure is used in the tube connection portion. In this case, leakage from the tube connection portion is prevented, and the ease of work when connecting tubes increases.

In order to solve the above described problem, another aspect refers to a refrigerating cycle device with a refrigerant circuit. The refrigerant circuit is provided with at least one tube connection portion to which a refrigerant tube is removably connected, and the above described bite type tube connection structure is used in the tube connection portion. In this case, refrigerant is prevented from leaking from the connection portion of the refrigerant tube. In addition, the ease of work when connecting tubes increases.

In the above described refrigerating cycle device, it is preferable for the refrigerant which circulates through the refrigerant circuit to be a high-pressure gas refrigerant. In the case where carbon dioxide is used as the refrigerant, for example, the gas pressure within the refrigerant tube becomes high. Regarding this, the present invention increases the reliability of the device even in the case where a tube connection structure which leaks less refrigerant is required.

In the above described refrigerating cycle device, it is preferable for the refrigerant which circulates through the refrigerant circuit to be hydrocarbon refrigerant. Even in the case where the refrigerant is combustible, as in the case of hydrocarbon refrigerant, and a tube connection structure which leaks less refrigerant is required, the reliability of the device can be increased.

It is preferable for the above described refrigerating cycle device to be a heat pump type hot-water supply device. In refrigerating cycle devices operated in a supercritical cycle, the pressure of the refrigerant gas within the refrigerant tube becomes high, and therefore, a tube connection structure which leaks less refrigerant is required. Regarding this, the present invention increases the reliability of the device.

It is preferable for the above described refrigerating cycle device to be a heat pump type hot-water supply device. In heat pump type hot-water supply devices, the pressure of the refrigerant gas within the refrigerant tube becomes high, so that hot water can be supplied. Therefore, a tube connection structure which leaks less refrigerant is required. Regarding this, the present invention increases the reliability of the device.

In order to solve the above described problem, another aspect refers to a hot-water supply device. In the hot-water supply device, the above described bite type tube connection structure is used in the tube connection portion provided in the circuit through which hot water circulates. In many cases, tubes for supplying hot water are connected on-site. Regarding this, leakage from the tube connection portion is prevented and the ease of work increases when the above described bite type tube connection structure is used.

In order to solve the above described problem, a further aspect of the present invention provides a bite type tube connection method according to claim 15.

According to this method, the fitting main body having the above described bite type tube connection structure, a fastening nut and a bite type sleeve in cylindrical form are prepared. Next, a connection tube is fitted into the fastening nut and the bite type sleeve. Subsequently, an end portion of the connection tube fitted into the fastening nut and the bite type sleeve is inserted into the tube connection opening of the fitting main body. Then, the connection tube is held in a predetermined location within the fitting main body while the fastening nut is fastened by hand, so that a first pressing force is applied, and thus, the primary deforming portion of the bite type sleeve bites into the connection tube through the first pressing force or is inserted between the fitting main body and the connection tube in a wedge-like fashion, so that the connection tube is temporarily held against the fitting main body. Furthermore, the fastening nut is fastened against the fitting main body with a predetermined torque using a fastening tool, and thus, a second pressing force which is greater than the first pressing force is applied, so that the secondary deforming portion of the bite type sleeve bites into the connection tube as a result of the second pressing force, and the connection tube is secured to the fitting main body.

According to this method, the primary deforming portion of the bite type sleeve bites into the connection tube, or the primary deforming portion can be inserted between the fitting main body and the connection tube in a wedge-like fashion through the first pressing force applied when the fastening nut is fastened by hand. As a result, the connection tube can be held in a predetermined location. Accordingly, it becomes unnecessary to hold the connection tube in a predetermined location when the fastening nut is fastened using a fastening tool, and the ease of work increases a great deal.

Further described is an on-site tube connection method to which the above described bite type tube connection method is applied. In this case, leakage from the tube connection portion is prevented when tube assembly is carried out on-site, and therefore, the ease of work increases.

### BRIEF DESCRIPTION OF THE DRAWINGS

Fig. 1 is a longitudinal cross-sectional view showing a bite type tube fitting according to a first embodiment of the present invention;
Figs. 2(a) to 2(c) are diagrams illustrating a method for connecting tubes using a tube fitting; Fig. 2(a) is a partial cross-sectional view showing a state where no tube is connected, Fig. 2(b) is a partial cross-sectional view showing a state where a connection tube is temporarily held by means of a fastening nut, and Fig. 2(c) is a partial cross-sectional view showing a state where the connection type is fastened by means of a fastening nut;
Fig. 3 is a partial cross-sectional view of the fitting main body that forms a tube fitting;
Fig. 4 is a partial cross-sectional view of a fastening nut that forms a tube fitting;
Fig. 5 is a cross-sectional view showing an enlargement of section A in Fig. 4;
Figs. 6(a) to 6(c) are diagrams illustrating a method for connecting tubes using a bite type tube fitting according to a second embodiment; Fig. 6(a) is a partial cross-sectional view showing a state where fastening is started, Fig. 6(b) is a partial cross-sectional view showing a state where a connection tube is temporarily held by means of a fastening nut, and Fig. 6(c) is a partial cross-sectional view showing a state where the connection tube is fastened by means of a fastening nut;
Figs. 7(a) to 7(c) are diagrams illustrating a method for connecting tubes using a bite type tube fitting according to a third embodiment; Fig. 7(a) is a partial cross-sectional view showing a state where fastening is started, Fig. 7(b) is a partial cross-sectional view showing a state where a connection tube is temporarily held by means of a fastening nut, and Fig. 7(c) is a partial cross-sectional view showing a state where the connection tube is fastened by means of a fastening nut;
Fig. 8 is a cross-sectional view showing a closing valve according to a fourth embodiment of the present invention in a connected state;
Fig. 9 is a partial cross-sectional view of a bite type tube fitting having different diameters according to a fifth embodiment of the present invention in a connected state;
Fig. 10 is a schematic diagram showing a refrigerating cycle device according to a sixth embodiment of the present invention;
Fig. 11 is a schematic diagram showing a refrigerating cycle device according to a seventh embodiment of the present invention;
Fig. 12 is a schematic diagram showing a refrigerating cycle device according to an eighth embodiment of the present invention;
Fig. 13 is a schematic diagram showing a refrigerating cycle device according to a ninth embodiment of the present invention;
Fig. 14 is a partial cross-sectional view illustrating a method for connecting tubes using a bite type tube fitting according to a tenth embodiment of the present invention in the state when fastening is started;
Fig. 15 is a diagram showing tubes in the state after being fastened by means of a fastening nut;
Fig. 16 is a partial cross-sectional view of the fitting main body which forms part of a tube fitting;
Fig. 17 is a partial cross-sectional view of a fastening nut which forms part of a tube fitting;
Figs. 18(a) to 18(d) are schematic diagrams showing variations of a notch; and
Fig. 19 is a partial cross-sectional view of a bite type tube fitting according to the prior art.

### BEST MODE FOR CARRYING OUT THE INVENTION

### (First Embodiment)

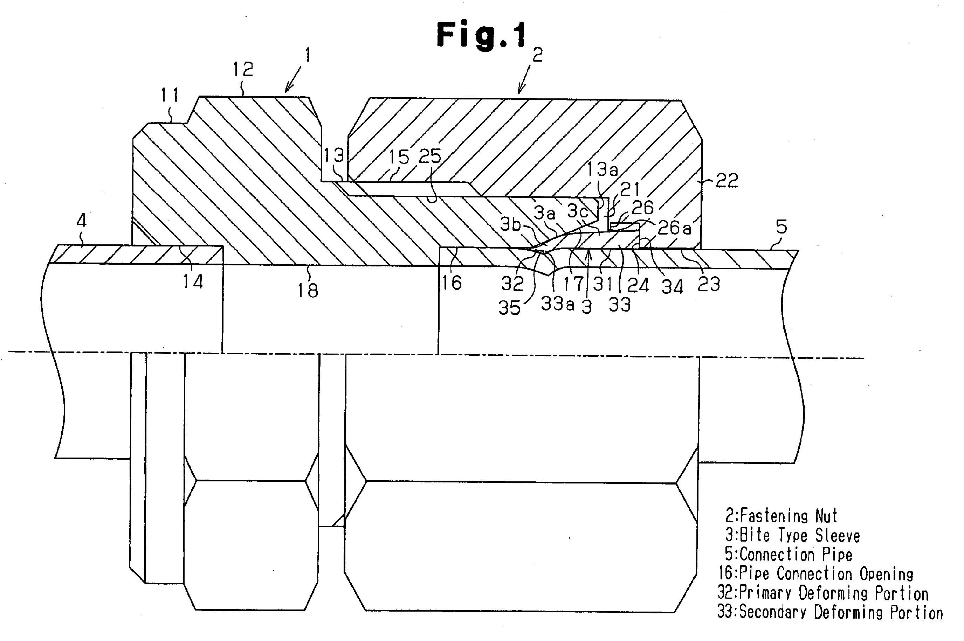

In the following, a bite type tube fitting having a bite type tube connection structure according to a first embodiment of the present invention is described in reference to Figs. 1 to 5.

As shown in Figs. 1 to 3, the bite type tube fitting according to the present embodiment is a tube fitting for connecting refrigerant tubes made of copper for a refrigerant cycle device. The bite type tube connection structure according to the present invention is used in a tube connection portion in which a tube is removably connected. The bite type tube fitting is made of a copper alloy having a higher hardness than copper tubes. The bite type tube fitting is provided with a main body of a fitting 1, a fastening nut 2, which is a fastening part, and a bite type sleeve 3 in cylindrical form. In the bite type tube fitting, a fixed tube 4 made of copper is connected to the proximal end of the fitting main body 1, that is to say, the end portion on the side opposite to the fastening nut 2. In addition, a connection tube 5 made of copper is removably connected to the connection end of the fitting main body 1, that is to say, the end portion on the side close to the fastening nut 2.

The fitting main body 1 is provided with a socket portion 11, a nut portion 12 and a tube connection portion 13. The socket portion 11 is brazed in a state where the fixed tube 4 is inserted. The nut portion 12 has a form that makes it easy to hold the fitting main body 1 when the fastening nut 2 is fastened. The connection tube 5 is removably connected to the tube connection portion 13 via the fastening nut 2.

A tube connection opening 14 into which an end portion of the fixed tube 4 is inserted is created in the socket portion 11 and the nut portion 12. The end portion of the fixed tube 4 is placed on and connected to the tube connection opening 14. The fixed tube 4 is brazed in such a state as to make contact with the bottom wall of the tube connection opening 14.

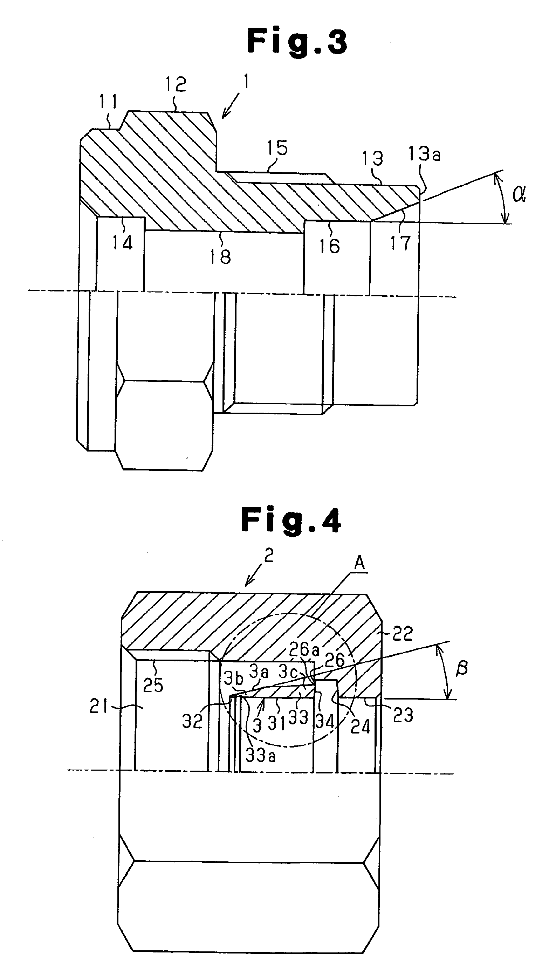

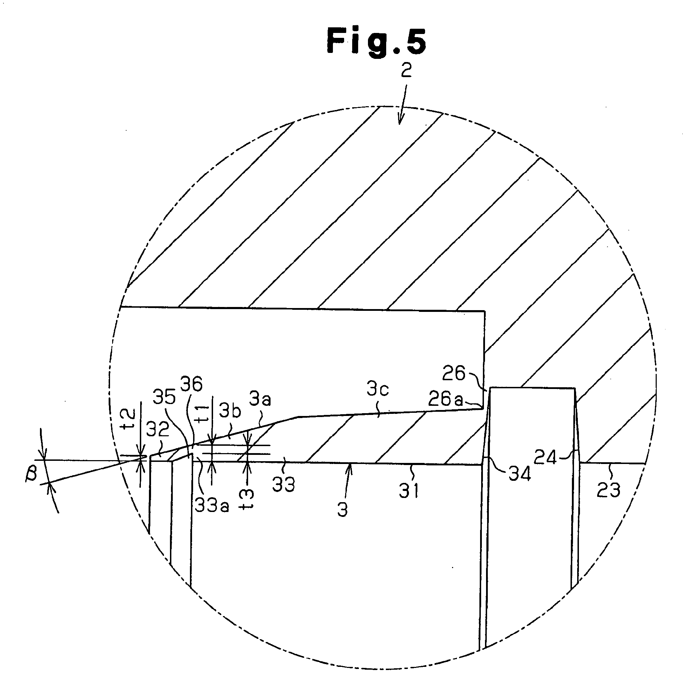

An external thread 15 for threading into the fastening nut 2 is provided on the external surface around the tube connection portion 13. A tube connection opening 16 into which an end portion of the connection tube 5 is inserted is created in the tube connection portion 13. An end portion of the connection tube 5 is placed in a predetermined location in the tube connection opening 16 and removably connected. A tapered guiding surface 17, which is inclined by an angle α relative to the center axis, is formed in the end portion of the tube connection opening 16 (see Fig. 3). The tapered guiding surface 17 is provided so as to guide the distal end portion 33a of the secondary deforming portion 33 of the bite type sleeve 3 so that it bites into the connection tube 5 (see Fig. 5). In the tube connection opening 16, the diameter in the portion of the tapered guiding surface 17 decreases toward the bottom of the tube connection opening 16 from the end surface 13a close to the fastening nut 2. The inclination angle α cannot be great if the distal end portion 33a of the secondary deforming portion 33 of the bite type sleeve 3 is to be bendable using a small force. In addition, if the inclination angle α is too small, the secondary deforming portion 33 is inserted between the connection tube 5 and the tube connection portion 13 without biting into the connection tube 5. Accordingly, it is preferable for the inclination angle α to be within a range from 15° to 30° relative to the center axis. It is more preferable for the inclination angle α to be within a range from 20° to 25°. A communicating hole 18 is created in the center portion of the fitting main body 1, and the two tube connection openings 14 and 16 are connected to this communicating hole 18.

A through hole 23 through which the connection tube 5 penetrates is created at the center of the side wall 22 of the fastening nut 2. In addition, the inner wall surface of the side wall 22 is a pressing surface 24 for pressing the bite type sleeve 3. In addition, an internal thread 25 into which the external thread 15 of the fitting main body 1 is threaded is provided on the inner surface around the fastening nut 2. Furthermore, a bite type sleeve 3 which is formed integrally with the fastening nut 2 is provided inside the fastening nut 2.

As shown in Fig. 4, the bite type sleeve 3 is a cylinder with a through hole 31 into which the connection tube 5 is fitted. In addition, the distal end portion of the bite type sleeve 3, that is to say, the end portion close to the fitting main body 1 is formed as the primary deforming portion 32, and the rear portion of the primary deforming portion 32 is formed as the secondary deforming portion 33. The primary deforming portion 32 is a portion which bites into the connection tube 5 as a result of the pressing force applied in the axial direction, or is inserted between the tube connection portion 13 and the connection tube 5 in a wedge-like fashion when the fastening nut 2 is threaded around the fitting main body 1. The primary deforming portion 32 includes other configurations in which biting and insertion in a wedge-like fashion are achieved. The primary deforming portion 32 is formed integrally with the end of the secondary deforming portion 33. In the present embodiment, the pressing force in the axial direction applied when the fastening nut 2 is fastened is the first pressing force. In addition, the distal end portion 33a of the secondary deforming portion 33 is a portion which bites into the connection tube 5 as a result of the pressing force in the axial direction, which is greater than the above described first pressing force. In the present embodiment, the pressing force in the axial direction, which is greater than the first pressing force applied when the fastening nut 2 is fastened, is the second pressing force.

As shown in Figs. 4 and 5, the rear end surface of the bite type sleeve 3 is formed as a pressure receiving surface 34 which makes contact with the pressing surface 24 of the fastening nut 2. In addition, a tapered surface 3a which is inclined by an angle β relative to the center axis is formed on the external surface around the portion of the bite type sleeve 3 close to a distal end. A gently inclined tapered surface is formed on the external surface around the portion of the bite type sleeve 3 close to the pressure receiving surface 34. That is to say, the bite type sleeve 3 is provided with a tapered portion 3b having a tapered surface 3a and a cylindrical portion 3c having a gently inclined tapered surface. The inclination angle β is set to such an angle that the distal end portion 33a of the secondary deforming portion 33 can be bent with a small force, and the secondary deforming portion 33 is not inserted between the connection tube 5 and the tube connection portion 13 without biting into the connection tube 5, as is the inclination angle α of the tapered guiding surface 17. Concretely, it is preferable for the inclination angle β to be set such that the value of β/α is within a range from 0.5 to 1.0. In the present embodiment, the inclination angle β is set to 15°.

In the bite type sleeve 3, the thin portion close to the distal end of the tapered portion 3b is the primary deforming portion 32. In the case where the outer diameter of the connection tube 5 is 9.52 mm, the thickness t1 of the secondary deforming portion 33 in the vicinity of the border line between the primary deforming portion 32 and the secondary deforming portion 33 (that is to say, the thickness at the distal end of the secondary deforming portion 33) is 0.1 mm to 0.5 mm. In addition, the thickness t2 at the distal end of the primary deforming portion 32 is set substantially as small as the gap between the tube connection portion 13 and the connection tube 5. In the case where the thickness t2 is smaller than the thickness t1 at the distal end of the secondary deforming portion 33, the primary deforming portion 32 can easily deform toward the center axis of the connection tube 5, and thus, easily bites into the connection tube 5. When a portion of the primary deforming portion 32 of the bite type sleeve 3 is pressed by the tapered guiding surface 17, the distal end portion of the primary deforming portion 32 is bent toward the center axis of the connection tube 5 and bites into the connection tube 5. In addition, in the case where the thickness t2 is smaller than the gap between the tube connection portion 13 and the connection tube 5, and in the case where the distal end portion of the primary deforming portion 32 does not make contact with the tapered guiding surface 17, the distal end portion of the primary deforming portion 32 is inserted between the tube connection portion 13 and the connection tube 5 when the bite type sleeve 3 is pressed in the axial direction. Furthermore, in the case where the thickness in at least part of the primary deforming portion 32 is greater than the gap between the tube connection portion 13 and the connection tube 5, the thick portion of the primary deforming portion 32 is inserted between the fitting main body 1 and the connection tube 5 in a wedge-like fashion, and therefore, the connection tube 5 is temporarily held. According to the present embodiment, the thickness of the primary deforming portion 32 is set greater than the gap in at least part of the primary deforming portion 32.

As shown in Fig. 5, in the bite type sleeve 3, a notch 35 of which the cross section is a substantially right triangle is provided in the border portion between the primary deforming portion 32 and the secondary deforming portion 33 so that the distal end portion 33a of the secondary deforming portion 33 easily bites into the connection tube 5. A thin portion 36 is formed in the tapered portion 3b because of this notch 35, and therefore, the primary deforming portion 32 and the secondary deforming portion 33 deform separately. The thickness t3 in the thin portion 36 is set smaller than the thickness t2 at the distal end of the primary deforming portion 32 so that the bite type sleeve easily deforms as a result of the first pressing force when the fastening nut 2 is fastened. In addition, the surface of the notch 35 close to the secondary deforming portion 33 crosses the center axis of the bite type sleeve 3 at a right angle, and thus, a right angle edge portion (corner portion) is formed in the distal end portion 33a of the secondary deforming portion 33. This edge portion makes the distal end portion 33a of the secondary deforming portion 33 easily bite into the connection tube 5.

In addition, the bite type sleeve 3 is linked to the inner wall of the fastening nut 2 via a thin linking portion 26 in the vicinity of the pressure receiving surface 34 of the secondary deforming portion 33. Thus, the bite type sleeve 3 is formed integrally with the fastening nut 2. In addition, the portion 26a which is connected to the secondary deforming portion 33 is thinnest in the thin linking portion 26. The thickness of this portion 26a is set to such a thickness that shearing is possible by the pressing force (second pressing force) applied when the fastening nut 2 is fastened to the fitting main body 1. A cavity which extends from the portion of the thin linking portion 26 which links to the fastening nut 2 along the axial line is provided behind the bite type sleeve 3. The bite type sleeve 3 does not make contact with any obstacle, and moves through this space toward the pressing surface 24 on the side wall 22 of the fastening nut 2.

The bite type tube connection structure according to the first embodiment is a structure for removably connecting the connection tube 5 to the tube connection portion 13, and concretely, formed of the fitting main body 1 having a tube connection opening 16 into which the connection tube 5 is inserted, the fastening nut 2, which is fastened to the fitting main body 1, and the bite type sleeve 3 in cylindrical form. The bite type sleeve 3 is formed integrally with the fastening nut 2. In addition, the bite type sleeve 3 is formed of the primary deforming portion 32, which is inserted between the connection tube 5 and the tube connection opening 16 as a result of the first pressing force, and the secondary deforming portion 33, which bites into the connection tube 5 through the second pressing force, which is greater than the first pressing force.

Next, a method for connecting the connection tube 5 using a bite type tube fitting having the above described bite type tube connection structure is described. The fixed tube 4 is brazed to the fitting main body 1 in advance.

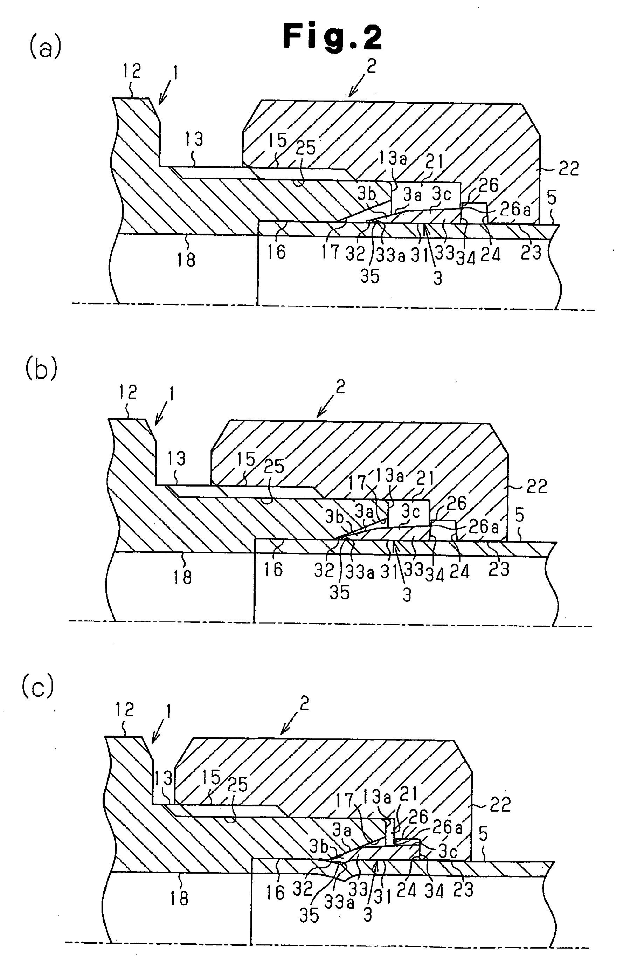

As shown in Fig. 2(a), first the distal end portion of the connection tube 5 is inserted into the through hole 23 of the fastening nut 2 and the through hole 31 of the bite type sleeve 3, so that the connection tube 3 is fitted into the fastening nut 2 and the bite type sleeve 3. Next, the distal end portion of the connection tube 5 is inserted into the tube connection opening 16 of the tube connection portion 13, and the fastening nut 2 is threaded to the fitting main body 1 by hand while the connection tube 5 is held. When the fastening nut 2 is threaded in this manner, the fastening nut 2 progresses in the axial direction of the fitting main body 1. In accordance with this, the bite type sleeve 3 is pressed against the tube connection portion 13 as a result of the first pressing force in the axial direction from the fastening nut 2. At this time, as shown in Fig. 2(b), the thickness and form of the primary deforming portion 32, as well as the gap between the fitting main body 1 and the connection tube 5, are in such a state that the primary deforming portion 32 bites into the connection tube 5 and is inserted between the internal surface around the fitting main body 1 and the external surface around the connection tube 5 in a wedge-like fashion, and thus, the connection tube 5 is temporarily held.

When the connection tube 5 is temporarily held against the fitting main body 1 in this manner, the fastening torque becomes great, and it is not necessary to hold the connection tube 5. In addition, the fastening nut 2 is fastened to the fitting main body 1 using a fastening tool, and thus, the bite type sleeve 3 is pressed against the tapered guiding surface 17. As a result, as shown in Fig. 2(c), the thinnest portion 26a of the thin linking portion 26 is sheared by the reaction force of the pressing force in the axial direction from the fastening nut 2 so that the bite type sleeve 3 is separated from the fastening nut 2. After that, the pressure receiving surface 34 of the bite type sleeve 3 makes contact with the pressing surface 24 of the fastening nut 2. Thus, the primary deforming portion 32 bites into the connection tube 5 more deeply when pressed by the pressing surface 24 of the fastening nut 2, and the distal end portion 33a of the secondary deforming portion 33 also bites into the connection tube 5. As a result, the connection tube 5 is connected to the fitting main body 1 in such a manner that no fluid leaks out. At this time, the fastening torque for fastening the fastening nut 2 reaches a predetermined value, and thus, the operation of fastening the fastening nut 2 is completed.

Here, the present embodiment has the following advantages.
(1) In the present embodiment, the first pressing force is applied when the fastening nut 2 is fastened by hand while the connection tube 5 is held in a predetermined location. This first pressing force makes the primary deforming portion 32 bite into the connection tube 5 or be inserted between the connection tube 5 and the fitting main body 1 in a wedge-like fashion, or both, and thus, the connection tube 5 is temporarily held against the bite type tube fitting. Accordingly, it is not necessary to hold the connection tube 5 when the fastening nut 2 is fastened using a fastening tool, and thus, the ease of work increases. In addition, when the fastening nut 2 is further fastened using a tool, the second pressing force is applied. This second pressing force can connect the bite type tube fitting and the connection tube 5 in such a manner that there is no leakage from the gap between the two.
(2) The thickness of the primary deforming portion 32 in the bite type sleeve 3 is less than the thickness t1 at the distal end of the secondary deforming portion 33. Therefore, any portion of the primary deforming portion 32 in the bite type sleeve 3 can be pressed toward the center axis of the connection tube 5 by the tapered guiding surface 17. At the stage where the pressing force starts being applied, the primary deforming portion 32 is bent toward the center axis of the connection tube 5 and bites into the connection tube 5. As a result, the connection tube 5 is temporarily held against the bite type tube fitting.
(3) The thickness of the primary deforming portion 32 in the bite type sleeve 3 is less than that in the distal end portion 33a of the secondary deforming portion 33. In addition, at least a portion of the primary deforming portion 32 is thicker than the gap between the fitting main body 1 and the connection tube 5. In this configuration, the primary deforming portion 32 can be inserted between the fitting main body 1 and the connection tube 5 in a wedge-like fashion while biting into the connection tube 5. Accordingly, the connection tube 5 is temporarily held against the bite type tube fitting without failure.
(4) The bite type sleeve 3 has a hardness equal to or more than that of the connection tube 5. Therefore, the primary deforming portion 32 can be inserted into the connection tube 5 and the secondary deforming portion 33 can bite into the connection tube 5.
(5) The external thread 15 for threading into the fastening nut 2 is formed on the fitting main body 1. In addition, the pressing force applied when the fastening nut 2 is fastened by hand is a first pressing force and the pressing force applied when the fastening nut 2 is fastened using a fastening tool and which is greater than the first pressing force is the second pressing force. In the present embodiment, the fastening nut 2 can simply be fastened in order to apply the first pressing force. The connection tube 5 is temporarily held against the bite type tube fitting in this manner, and after that, the fastening nut 2 can further be fastened using a fastening tool so that the connection tube 5 is secured. Accordingly, the operation of securing the connection tube 5 is easy to carry out using a fastening tool, such as a wrench, without holding the connection tube 5.
(6) The bite type sleeve 3 is formed integrally with the fastening nut 2. In addition, the secondary deforming portion 33 is separated from the fastening nut 2 through the second pressing force before biting into the connection tube 5. In this configuration, the number of parts can be reduced and the cost for manufacture can be reduced. In addition, it is not necessary to prepare the bite type sleeve 3 as a separate part or for the bite type sleeve 3 to be engaged in the tube connection opening 16, and therefore, the ease of work further increases.
(7) In the bite type sleeve 3, the primary deforming portion 32 is formed integrally with the distal end of the secondary deforming portion 33. In addition, the secondary deforming portion 33 is linked to the inner wall of the fastening nut 2 via the thin linking portion 26. In this case, the bite type sleeve 3 can be easily separated from the fastening nut 2 by fastening the fastening nut 2. In addition, the bite type sleeve 3 bites into the connection tube 5 without rotating together with the fastening nut 2. Therefore, the bite type tube fitting and the connection tube 5 can be connected in such a manner that there is no leakage from the gap between the two.
(8) A thin portion 36 is formed in the border portion between the secondary deforming portion 33 and the primary deforming portion 32. Therefore, the distal end portion 33a of the secondary deforming portion 33 can easily bite into the connection tube 5 while the effects of the primary deforming portion 32 which is inserted between the fitting main body 1 and the connection tube 5 are reduced.
(9) The thickness t3 in the thin portion 36 is less than the thickness t2 at the distal end of the primary deforming portion 32, and therefore, the primary deforming portion 32 can be deformed by the first pressing force applied when the fastening nut 2 is threaded by hand so as to be temporarily held against the connection tube 5.
(10) The thin portion 36 can be formed by providing a notch 35 on the internal surface around the bite type sleeve 3. Therefore, the notch 35 can be easily machined in the bite type sleeve 3. In addition, a corner portion is formed in the distal end portion of the secondary deforming portion 33 because of the notch 35. Accordingly, the corner portion can bite into the connection tube 5, as in the case of conventional bite fittings.
(11) The notch 35 has such a form that the distal end is pointed in a cross section. Therefore, even a small notch 35 makes it possible to easily deform the primary deforming portion 32. Accordingly, the bite type sleeve 3 can be shortened and the size of the bite type tube fitting can be reduced.
(12) The notch 35 has such a form as to be a substantially right triangle in a cross section. In addition, the surface of the notch 35 which is close to the secondary deforming portion 33 crosses the center axis of the bite type sleeve 3 at a right angle, and therefore, the form at the distal end of the secondary deforming portion 33 can be a right angle. Therefore, the primary deforming portion 32 can be deformed so as to be temporarily held against the connection tube 5. Accordingly, the secondary deforming portion 33 can bite into the connection tube 5 without failure.
(13) The primary deforming portion 32 of the bite type sleeve 3 is inserted between the connection tube 5 and the fitting main body 1 through the first pressing force applied when the fastening nut 2 is fastened, and thus, the connection tube 5 is held in a predetermined location. Accordingly, the operation of holding the connection tube 5 becomes unnecessary when the fastening nut 2 is fastened using a fastening tool, and the ease of work increases a great deal.
(14) The connection tube 5 is temporarily held by fastening the fastening nut 2 by hand, and the fastening nut 2 can be strongly fastened using any well-known fastening tool to finish assembly, and therefore, the work is easy to carry out.
(15) The bite type tube fitting according to the present embodiment is a two-directional tube fitting where the above described bite type tube connection structure is provided in one direction and a tube is brazed in the other direction. Bite type tube fittings of this type are appropriate in the case where only one tube connection portion is used on-site.

### (Second Embodiment)

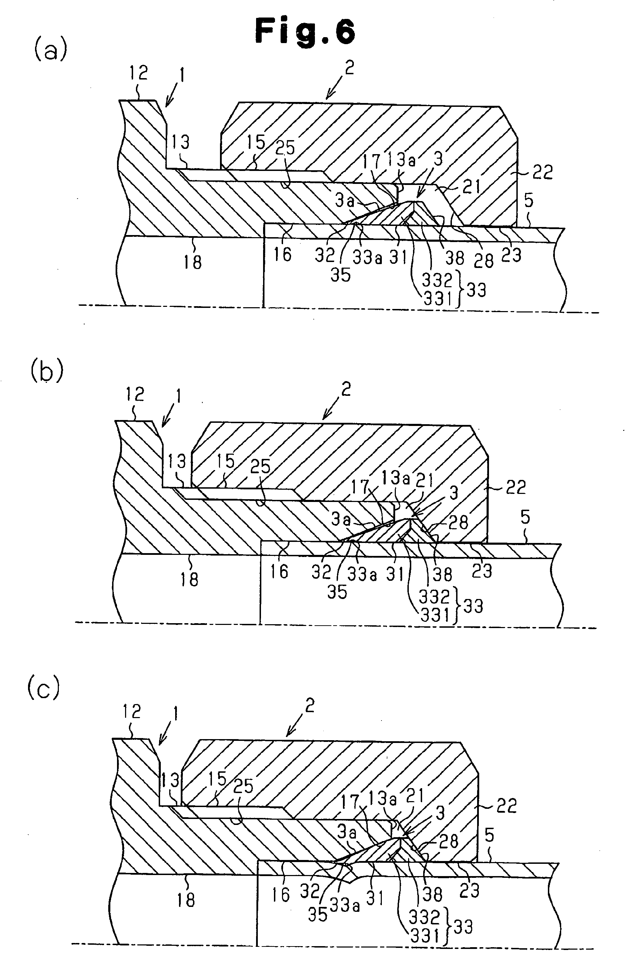

Next, a bite type tube connection structure according to a second embodiment and a bite type tube fitting using the same are described in reference to Fig. 6. In the second embodiment, detailed descriptions of portions which are the same as in the first embodiment are omitted.

In the second embodiment, the bite type sleeve 3 is separate from the fastening nut 2 and the fitting main body 1. Therefore, the fitting main body 1 has exactly the same configuration as in the first embodiment. In addition, the second embodiment is different from the first embodiment in that the thin linking portion 26 shown in Fig. 5 is omitted and the bite type sleeve 3 has a divided structure. In the following, the respective components are compared with those in the first embodiment.

As shown in Fig. 6, the fitting main body 1 has a socket portion 11 (see Fig. 1), a nut portion 12, and a tube connection portion 13.

The bite type sleeve 3 is placed in the space 21 within the fastening nut 2, but not formed integrally with the fastening nut 2. Therefore, the space 21 within the fastening nut 2 has a simple, cylindrical form. The inner wall surface of the side wall 22 is a pressing surface 28 which presses the rear end surface of the bite type sleeve 3. The pressing surface 28 is inclined relative to the center axis of the connection tube 5.

The bite type sleeve 3 is a cylinder with a through hole 31 into which the connection tube 5 is fitted. In addition, the distal end portion of the bite type sleeve 3 is formed as the primary deforming portion 32, and the rear portion of the primary deforming portion 32 is formed as the secondary deforming portion 33. The secondary deforming portion 33 is divided into a first portion 331 and a second portion 332. In addition, the dividing surface between the first and second portions 331 and 332 crosses the center axis of the tube fitting at a right angle in a portion close to the outer periphery and is inclined along the tapered guiding surface 17 in a portion close to the inner peripheral surface. The inclination angle is greater than that of the tapered guiding surface 17. The primary deforming portion 32 is formed integrally with the distal end of the first portion 331 of the secondary deforming portion 33. The rear end surface of the second portion 332 is a pressure receiving surface 38 which makes contact with the pressing surface 28 of the fastening nut 2. In the distal end portion of the first portion 331, a tapered surface 3a which is inclined by an angle β relative to the center axis is formed. The bite type sleeve 3 in the second embodiment is different from that in the first embodiment and not formed integrally with the fastening nut 2, and formed of two separate parts made of a copper alloy. The form of the primary deforming portion 32 which includes the inclination angle β of the tapered surface 3a and the form of the notch 35 is the same as in the first embodiment.

The bite type tube connection structure according to the second embodiment is a structure in which the connection tube 5 is removably connected to the tube connection portion 13, and concretely, formed of the fitting main body 1 having the tube connection opening 16 into which the connection tube 5 is inserted, the fastening nut 2, which is fastened to the fitting main body 1, and the bite type sleeve 3 in cylindrical form. In addition, the bite type sleeve 3 is formed of two separate parts. Furthermore, the bite type sleeve 3 is formed of the primary deforming portion 32, which either bites into the connection tube 5 or is inserted between the connection tube 5 and the tube connection opening 16 in a wedge-like fashion as a result of the first pressing force, and the secondary deforming portion 33, which bites into the connection tube 5 and deforms as a result of the second pressing force in the axial direction, which is greater than the first pressing force.

Next, a method for connecting the connection tube 5 using a bite type tube fitting having the bite type tube connection structure according to the second embodiment is described.

The fitting main body 1 is the same as in the first embodiment. The bite type sleeve 3 is not formed integrally with the fastening nut 2. That is to say, the bite type sleeve 3 is separate from the fastening nut 2.

First, as shown in Fig. 6(a), the distal end portion of the connection tube 5 is inserted into the through hole 23 of the fastening nut 2 and the through hole 31 of the bite type sleeve 3, so that the connection tube 5 is fitted into the fastening nut 2 and the bite type sleeve 3. Next, the distal end portion of the connection tube 5 is inserted into the tube connection opening 16 of the tube connection portion 13 until it makes contact with the bottom wall of the tube connection opening 16. Thus, the bite type sleeve 3 makes contact with the tapered guiding surface 17.

Subsequently, the fastening nut 2 is fastened by hand while the connection tube 5 is held. Thus, the fastening nut 2 approaches the fitting main body 1. In accordance with this, the pressing surface 28 of the fastening nut 2 makes contact with the pressure receiving surface 38 of the bite type sleeve 3. Therefore, a pressing force (first pressing force) is applied to the pressure receiving surface 38 of the bite type sleeve 3 in the fitting main body 1 by the fastening nut 2. Then, the bite type sleeve 3 is pressed against the tube connection portion 13 as a result of the pressing force from the fastening nut 2. At this time, as shown in Fig. 6(b), the primary deforming portion 32 may bite into the connection tube 5 or be inserted between the internal surface around the fitting main body 1 and the external surface around the connection tube 5 in a wedge-like fashion, depending on the relationship between the thickness and the form of the primary deforming portion 32, as well as the gap between the fitting main body 1 and the connection tube 5, and thus, the connection tube 5 is temporarily held.

When the connection tube 5 is held against the fitting main body 1, the fastening torque increases, and it becomes unnecessary to hold the connection tube 5. Therefore, the worker can fasten the fastening nut 2 against the fitting main body 1 using a fastening tool, without holding the connection tube 5. As the fastening nut 2 is further fastened, the distal end portion of the bite type sleeve 3 is pressed against the tapered guiding surface 17 as a result of the pressing force (second pressing force) from the pressing surface 28. As a result, as shown in Fig. 6(c), the primary deforming portion 32 of the bite type sleeve 3 bites into the connection tube 5 and is inserted more deeply, and at the same time, the distal end portion 33a of the secondary deforming portion 33 deforms and bites into the connection tube 5. At this time, the pressure receiving surface 38 of the bite type sleeve 3 is pressed against the pressing surface 28 of the fastening nut 2 in the axial direction. Therefore, the edge portion (edge portion of the pressure receiving surface 38 close to the fastening nut 2) 332a which is close to the fastening nut 2 of the secondary deforming portion 33 also bites into the connection tube 5.

As a result, the connection tube 5 is connected to the fitting main body 1 in such a manner that no fluid leaks out. Thus, when the fastening torque reaches a predetermined value, the operation of fastening the fastening nut 2 is completed. In a state where the connection tube 5 is connected in this manner, the edge portion 332a of the secondary deforming portion 33 close to the fastening nut 2 bites into the connection tube 5, and therefore, vibration conveyed through the connection tube 5 is stopped by the edge portion 32a. As a result, the distal end portion of the secondary deforming portion 33 biting into the connection tube 5 less affects the sealing effects.

According to the second embodiment, the advantages (1) to (5) and (8) to (15) of the first embodiment are gained.

### (Third Embodiment)

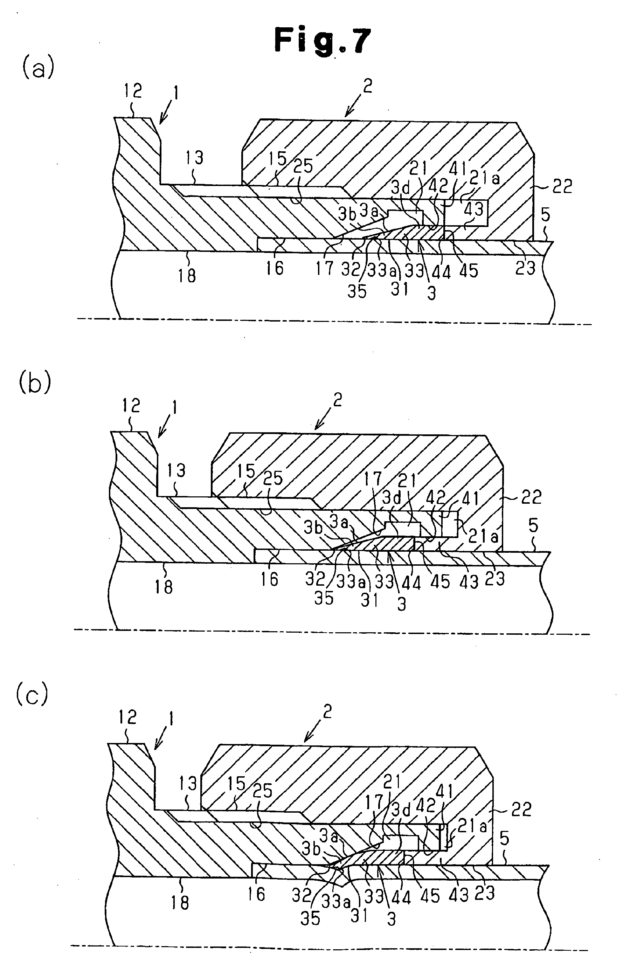

Next, a bite type tube connection structure according to a third embodiment and a bite type tube fitting using the same are described in reference to Fig. 7. In the third embodiment, detailed descriptions for portions which are the same as in the first embodiment are omitted.

In the third embodiment, the bite type sleeve 3 is integrated with the fitting main body 1. That is to say, the bite type sleeve 3, which is a separate part, is adhered to the fitting main body 1. Therefore, the fitting main body 1 and the fastening nut 2 have a configuration which is partially different from that of the first embodiment.

As shown in Fig. 7, the fitting main body 1 has a socket portion 11 (see Fig. 1), a nut portion 12, and a tube connection portion 13. The socket portion 11 and the nut portion 12 are the same as in the first embodiment. The tube connection portion 13 has an external thread 15, a tube connection opening 16, a tapered guiding surface 17, and a communicating hole 18. In addition, the end portion of the tube connection portion 13 close to the fastening nut 2 is formed as an extending portion 41 which extends toward the fastening nut 2. A wall which extends toward the center axis is formed in the extending portion 41, and an adhesion hole 42 used for adhesion with the bite type sleeve 3 is created in the center of this wall. The internal surface around the adhesion hole 42 is an adhesive surface, and is adhered to the external surface around the bite type sleeve 3. The external surface around the bite type sleeve 3 is adhered to the fitting main body 1 via the adhesion hole 42.

A through hole 23 through which the connection tube 5 penetrates is created in the center of the side wall 22 of the fastening nut 2. In addition, an internal thread 25 for threading around the external thread 15 of the fitting main body 1 is provided on the internal surface around the fastening nut 2. In the case of the fastening nut 2 of the third embodiment, a protruding portion 43 which protrudes toward the fitting main body 1 is formed on the side wall 22 around the through hole 23. The end surface of the protruding portion 43 close to the fitting main body 1 is formed as a pressing surface 44 which presses the bite type sleeve 3. In addition, the thickness of the protruding portion 43 is set so as to be substantially equal to or less than that in the rear end portion of the bite type sleeve 3. Therefore, an annular space 21a is created between the external surface around the protruding portion 43 and the internal surface around the fastening nut 2. This space 21a is a space in which the extending portion 41 of the fitting main body 1 is contained when the fastening nut 2 is fastened against the fitting main body 1.

The bite type sleeve 3 is a cylinder with a through hole 31 into which the connection tube 5 is fitted. In addition, the distal end portion of the bite type sleeve 3 is formed as the primary deforming portion 32, and the rear portion of the primary deforming portion 32 is formed as the secondary deforming portion 33. The primary deforming portion 32 is formed integrally with the distal end of the secondary deforming portion 33. The rear end surface of the bite type sleeve 3 is formed as a pressure receiving surface 45 which makes contact with the pressing surface 44 of the fastening nut 2. The external surface around the bite type sleeve 3 close to the distal end is a tapered surface 3a which is inclined by an angle β relative to the center axis. Meanwhile, the external surface around the bite type sleeve 3 is a surface substantially parallel to the center axis in the vicinity of the pressure receiving surface 45. That is to say, the bite type sleeve 3 is formed of a tapered portion 3b which includes the tapered surface 3a and a cylindrical portion 3c which includes a surface substantially parallel to the center axis. The bite type sleeve 3 is made of a copper alloy, and separate from the fastening nut 2. The external surface around the cylindrical portion 3d of the bite type sleeve 3 is adhered to the extending portion 41 of the fitting main body 1. As for the form of the primary deforming portion 32, the inclination angle α of the tapered surface 3a and the form of the notch 35 are the same as in the first embodiment.

The bite type tube connection structure according to the third embodiment is a structure in which the connection tube 5 is removably connected to the tube connection portion 13, and concretely, formed of the fitting main body 1 having a tube connection opening 16 into which the connection tube 5 is inserted, the fastening nut 2 which is fastened against the fitting main body 1, and the bite type sleeve 3 in cylindrical form. In addition, the bite type sleeve 3 is integrated with the fitting main body 1 through adhesion. The bite type sleeve 3 is formed of the primary deforming portion 32, which is inserted between the connection tube 5 and the fitting main body 1 as a result of the first pressing force, and the secondary deforming portion 33, which deforms and bites into the connection tube 5 as a result of the second pressing force in the axial direction, which is greater than the first pressing force.

Next, a method for connecting the connection tube 5 using a bite type tube fitting having the bite type tube connection structure according to a third embodiment is described.

The bite type sleeve 3 is adhered to the fitting main body 1 via an adhesion hole 42. In addition, the bite type sleeve 3 is formed integrally with the fastening nut 2. First, as shown in Fig. 7(a), the distal end portion of the connection tube 5 is inserted into the through hole 23 of the fastening nut 2 and the through hole 31 of the bite type sleeve 3, so that the connection tube 5 is fitted into the fastening nut 2 and the bite type sleeve 3. Next, the distal end portion of the connection tube 5 is inserted into the tube connection opening 16 of the tube connection portion 13 until it makes contact with the bottom wall of the tube connection opening 16. At this time, the pressing surface 44 of the fastening nut 2 makes contact with the pressure receiving surface 45 of the bite type sleeve.

Next, the fastening nut 2 is fastened by hand while the connection tube 5 is held, and thus, the fastening nut 2 approaches the fitting main body 1. In accordance with this, a pressing force is applied to the pressure receiving surface 45 of the bite type sleeve 3 in the fitting main body 1 by the fastening nut 2 (first pressing force). The bite type sleeve 3 is adhered to the adhesion hole 42 of the extending portion 41 with such strength as to come off when receiving the first pressing force. Therefore, at the stage where the fastening nut 2 is fastened by hand, the bite type sleeve 3 is separated from the fitting main body 1 and moves toward the rear end of the tube connection opening 16. In addition, as shown in Fig. 7(b), the primary deforming portion 32 bites into the connection tube 5 and is inserted between the fitting main body 1 and the connection tube 5 in a wedge-like fashion, and thus, the connection tube 5 is temporarily held.

When the connection tube 5 is temporarily held against the fitting main body 1, the fastening torque increases, and it becomes unnecessary to hold the connection tube 5. Therefore, the worker can fasten the fastening nut 2 against the fitting main body 1 using a fastening tool without holding the connection tube 5. As the fastening nut 2 is further fastened, the distal end portion of the bite type sleeve 3 is pressed against the tapered guiding surface 17 as a result of the pressing force from the pressing surface 44 (second pressing force). As a result, as shown in Fig. 7(c), the primary deforming portion 32 of the bite type sleeve 3 is inserted more deeply while biting into the connection tube 5, and at the same time, the distal end portion 33a of the secondary deforming portion 33 deforms and bites into the connection tube 5. As a result, the connection tube 5 is connected to the fitting main body 1 in such a manner that no fluid leaks out. In addition, the operation of fastening the fastening nut 2 is complete when the fastening torque reaches a predetermined value.

According to the third embodiment, advantages (1) to (4) and (8) to (15) of the first embodiment are obtained.
(1) The bite type sleeve 3 is integrated with the fitting main body 1. In addition, the secondary deforming portion 33 is separated from the fitting main body 1 as a result of the first pressing force before biting into the connection tube 5. In this configuration, the number of parts is small and the cost for manufacturing is reduced. In addition, the process for attaching the bite type sleeve 3 to the connection tube 5 and attaching it to the fitting main body 1 becomes unnecessary. Accordingly, the ease of work further increases.
(2) In the bite type sleeve 3, the primary deforming portion 32 is formed integrally with the distal end portion of the secondary deforming portion 33. In addition, the external surface around the cylindrical portion 3d of the bite type sleeve 3 is adhered to the internal surface around the adhesion hole 42 of the fitting main body 1. In addition, the bite type sleeve 3 is separated from the fitting main body 1 as a result of the pressing force in the axial direction, which is applied when the fastening nut 2 is fastened by hand (first pressing force). As a result, the bite type sleeve 3 is easily separated from the fitting main body 1 by fastening the fastening nut 2 by hand, and thus, the connection tube 5 is connected to the fitting main body 1 in such a manner that no fluid leaks out.

### (Fourth Embodiment)

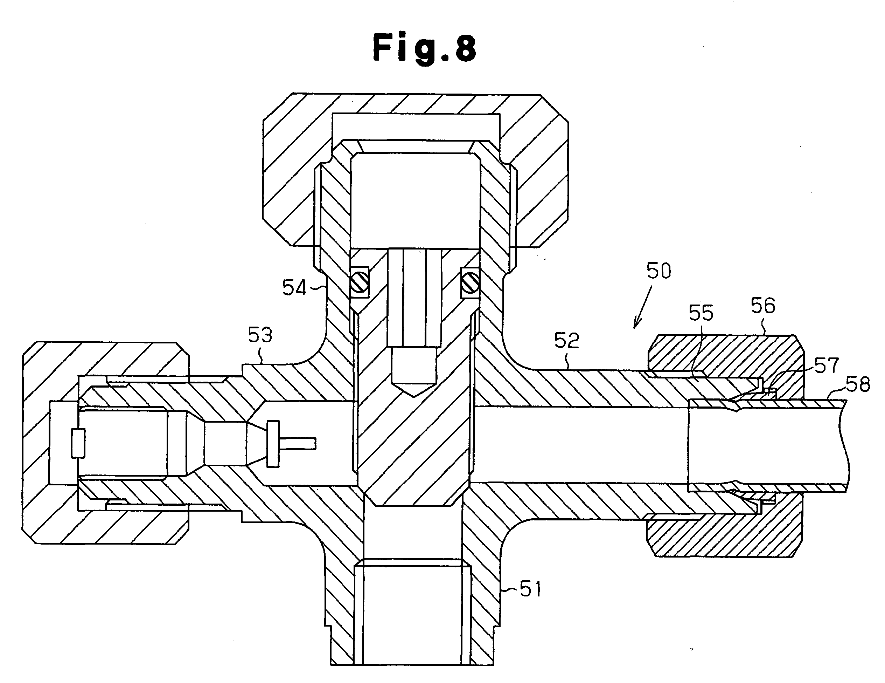

Next, a fourth embodiment is described in reference to Fig. 8. The fourth embodiment provides a closing valve having the bite type tube connection structure according to the first embodiment and a connection portion which extends in three directions.

As shown in Fig. 8, a closing valve 50 is provided with a housing in substantially cross form, and a first cylindrical portion 51 to a fourth cylindrical portion 54 are connected to the housing in such a manner as to be connected to each other. A first port is formed in the first cylindrical portion 51, to which a fixed tube (not shown) is brazed. A second port is formed in the second cylindrical portion 52, which has the bite type tube connection structure according to the first embodiment, and to which a connection tube 58 is removably connected. A service port with a check valve for vacuuming air from the refrigerant circuit and filling the refrigerant circuit with refrigerant is formed in the third cylindrical portion 53. An operation portion for the closing valve 50 is formed in the fourth cylindrical portion 54.

The second cylindrical portion 52 has a tube connection portion 55 which is the same as the tube connection portion 13 in the first embodiment. A fastening nut 56 is threaded around the tube connection portion 55. A bite type sleeve 57 is provided between the fastening nut 56 and the end portion of the tube connection portion 55. The fastening nut 56 and the bite type sleeve 57 are the same as the fastening nut 2 and the bite type sleeve 3 in the first embodiment. Therefore, the fastening nut 56 is integrated with the bite type sleeve 57 before being fastened to the second cylindrical portion 52. Thus, the connection tube 58 has the same bite type tube connection structure as in the first embodiment, and is connected to the tube connection portion 55 of the closing valve 50. Therefore, according to the fourth embodiment, fluid is prevented from leaking from the connection portion with the connection tube 58, and the ease of work when connecting tubes increases.

### (Fifth Embodiment)

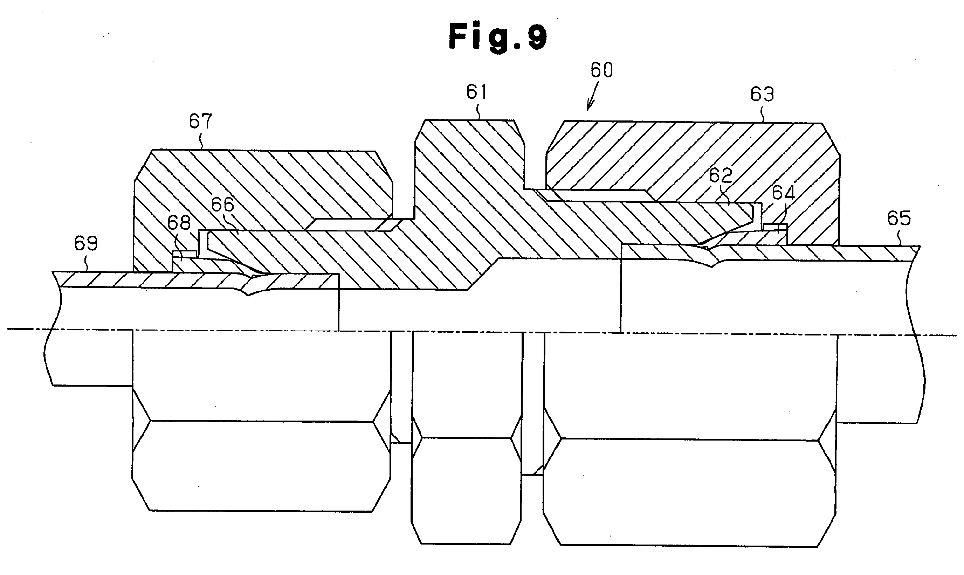

Next, a fifth embodiment is described in reference to Fig. 9. The fifth embodiment provides a tube fitting having different diameters and the bite type tube connection structure according to the first embodiment in the tube connection portion, as well as a connection portion in two directions.

As shown in Fig. 9, a tube fitting with different diameters 60 is provided with a main body of a fitting 61, and two tube connection portions 62 and 66 are provided at the two ends of the fitting main body 61. The two tube connection portions 62 and 66 both have the same structure as the tube connection portion 13 in the first embodiment. The fastening nuts 63 and 67 are respectively threaded around the tube connection portions 62 and 66. In addition, the bite type sleeves 64 and 68 are placed between the fastening nut 63 and the tube connection portion 62 and between the fastening nut 67 and the tube connection portion 66, respectively. The two fastening nuts 63 and 67 and the two bite type sleeves 64 and 68, have the same configuration as the fastening nut 2 and the bite type sleeve 3 in the first embodiment, respectively. In the present embodiment, the diameter of the connection tube 65 is greater than the diameter of the connection tube 69. Therefore, the diameter of the tube connection portion 62, to which the connection tube 65 is connected, is greater than the diameter of the connection portion 66, to which the connection tube 69 is connected.

The tube fitting with different diameters 60 in the fifth embodiment is provided with tube connection portions 62 and 66 which extend in two directions, and the bite type tube connection structure according to the first embodiment is applied to the tube connection structures of the respective tube connection portions 62 and 66. This tube fitting with different diameters 60 prevents fluid from leaking out from the tube connection portion 62 and 66, and thus, the ease of work when connecting tubes increases.

### (Sixth Embodiment)

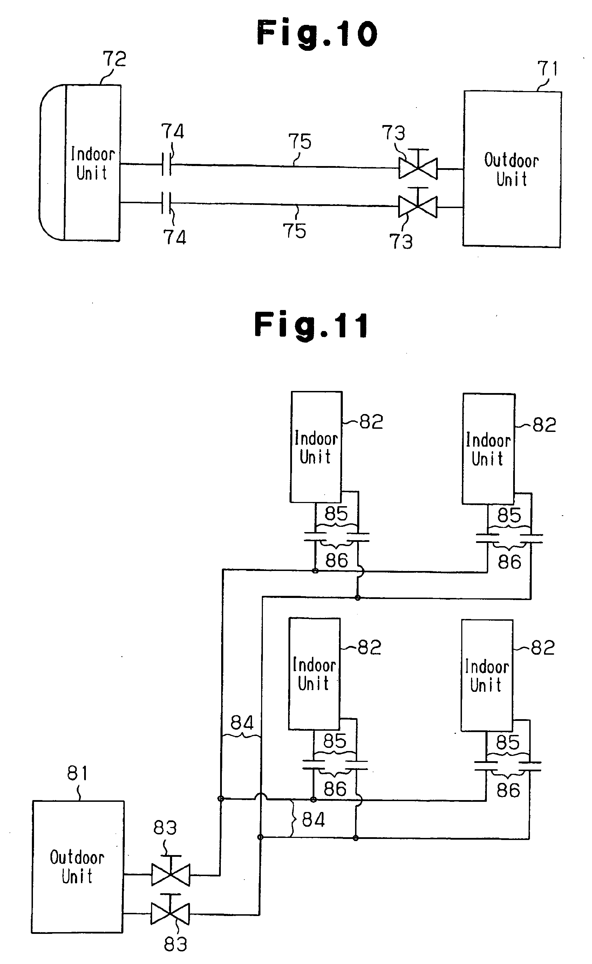

Next, the refrigerating cycle device according to a sixth embodiment is described in reference to Fig. 10. Fig. 10 shows the configuration of the entirety of a split air conditioner, which is a refrigerating cycle device in which hydrocarbon (HC) refrigerant, such as propane, is used. As shown in Fig. 10, the split air conditioner is provided with one outdoor unit 71 and one indoor unit 72. A closing valve 73 is attached in the hole of the outdoor unit 71 and a tube fitting 74 is attached in the hole of the indoor unit 72, and the closing valve 73 and the tube fitting 74 are connected to each other via a communicating tube 75. The bite type tube connection structure according to the first embodiment is adopted in the connection portion between the closing valve 73 and the communicating tube 75 and between the tube fitting 74 and the communicating tube 75. Accordingly, the closing valve 50 according to the fourth embodiment is used for the closing valve 73 and the bite type tube fitting according to the first embodiment is used for the tube fitting 74.

In the refrigerating cycle device according to the sixth embodiment, the connection structure between the closing valve 73 and the communicating tube 75 and between the tube fitting 74 and the communicating tube 75, which is removably connected, is the same as the bite type tube connection structure according to the first embodiment. Accordingly, refrigerant is prevented from leaking from the tube connection portion of the communicating tube 75 and the ease of work when connecting the communicating tube 75 increases. In addition, a closing valve and the tube fitting where there is little refrigerant leakage, are used, and therefore, the reliability of the refrigerating cycle device using HC refrigerant increases.

### (Seventh Embodiment)

Next, a refrigerating cycle device according to a seventh embodiment is described in reference to Fig. 11. Fig. 11 shows the configuration of the entirety of the split air conditioner, which is also a refrigerating cycle device using HC refrigerant. As shown in Fig. 11, the split air conditioner is provided with one outdoor unit 81 and a plurality of indoor units 82 (four). A closing valve 83 is attached in the hole of the outdoor unit 81. A main communicating tube 84 is connected to the closing valve 83 during on-site tube assembly, and a branch tube 85 having a smaller diameter than the main communicating tube 84 is connected to the main communicating tube 84. The branch tube 85 is connected to the main communicating tube 84 using a tube fitting with different diameters 86. The respective indoor units 82 are connected to the outdoor unit 81 in parallel via the branch tubes 85 and the main communicating tubes 84.

In the above described configuration, the bite type tube connection structure according to the first embodiment is applied to the tube connection portion of the closing valves 83, and concretely, the closing valve 50 of the fourth embodiment is used. In addition, the bite type tube connection structure according to the first embodiment is applied to the tube connection portion of the tube fitting with different diameters 86, and concretely, the tube fitting with different diameters 60 of the fifth embodiment is used.

In the refrigerating cycle device according to the seventh embodiment, the bite type tube connection structure according to the first embodiment is used in the tube connection portions between the main communicating tubes 84 and the branch tubes 85, which are assembled on-site. Therefore, the refrigerant is prevented from leaking from the tube connection portions between the main communicating tubes 84 and the branch tubes 85, and the ease of work when connecting the main communicating tubes 84 and the branch tubes 85 also increases. In addition, closing valves and the tube fittings with different diameters where there is little refrigerant leakage, are used, and thus, the reliability of the refrigerating cycle device using HC refrigerant increases.

### (Eighth Embodiment)

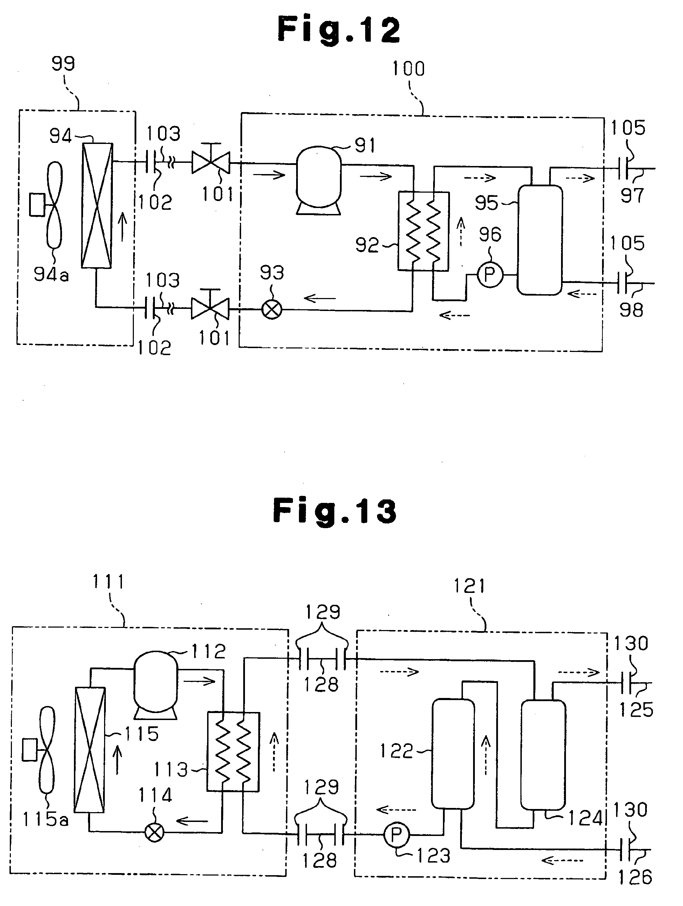

Next, a refrigerating cycle device according to an eighth embodiment is described in reference to Fig. 12. Fig. 12 shows the entire configuration of a heat pump type hot-water supply device, which is a refrigerating cycle device using a natural refrigerant, such as carbon dioxide. In the heat pump type hot-water supply device, the heat of condensation in the condenser is used as the heat source for hot water. As shown in Fig. 12, the heat pump type hot-water supply device is provided with a cold refrigerant circuit in which the refrigerant circulates in the direction of the solid arrows. In the refrigerant circuit, a compressor 91, a heat exchanger for water 92 which releases the heat generated when the refrigerant is condensed into the hot water, an expansion valve 93 and a heat exchanger for the heat supply 94, where outside air is used as the heat source, are arranged in this order and connected to this order. The refrigerant circuit is filled with refrigerant made of carbon dioxide. Thus, water is heated in the heat exchanger for water 92 using the heat from outside air through operation in a supercritical refrigeration cycle.

In the hot water circuit having a heat exchanger for water 92, water flows through the bottom of the hot water tank 95, a water circulating pump 96, a heat exchanger for water 92, and the upper portion of the hot water tank 95 in this order. A hot water feeding tube 97 for supplying hot water to a hot water tap, a bath or the like is connected to the upper portion of the hot water tank 95, and a water supply tube 98 is connected to the bottom of the hot water tank 95.

The heat pump type hot-water supply device is provided with an outdoor unit 99 which includes a heat exchanger for the heat supply 94 and a fan 94a, and an indoor unit 100, and the indoor unit 100 is formed of a refrigerant circuit device which includes a compressor 91, a heat exchanger for water 92 and an expansion valve 93, and a hot water circuit device which includes a hot water tank 95 and a water circulating pump 96. A closing valve 101 is connected to the hole of the indoor unit 100, a tube fitting 102 is connected to the hole of the outdoor unit 99, and the closing valve 101 and the tube fitting 102 are connected via a communicating tube 103. The bite type tube connection structure according to the first embodiment is applied in the connection portion of the communicating tube 103, and concretely, the closing valve 50 according to the fourth embodiment is used. In addition, the tube fitting according to the first embodiment is used as the tube fitting 102.

In addition, a tube fitting is also used in the hot water supply tube. That is to say, the hot water feeding tube 97 is connected to the upper portion of the hot water tank 95 via the tube fitting 105. In addition, the water supply tube 98 is connected to the bottom of the hot water tank 95 via the tube fitting 105. The bite type tube connection structure according to the first embodiment is applied to the two tube fittings 105, and concretely, the bite type tube fittings according to the first embodiment are used.

In the heat pump type hot-water supply device according to the eighth embodiment, the heat pump is operated in a supercritical refrigeration cycle in such a state that the refrigerant circuit is filled with refrigerant, such as carbon dioxide, and thus, hot water is gained. In this refrigerant circuit, the pressure of the refrigerant becomes high, and therefore, it is important to prevent the refrigerant from leaking from the tube connection portion. Regarding this, according to the present invention, a closing valve 101 and a tube fitting 102 to which the bite type tube connection structure according to the first embodiment is applied are used, and therefore, devices having high reliability are gained, and the ease of work when connecting tubes also increases. In addition, a tube fitting 105 to which the bite type tube connection structure according to the first embedment is applied is used in the tube connection structure for the hot water circuit, and therefore, an device having higher reliability is gained, and the ease of work when connecting tubes further increases. In addition, a heat exchanger for the heat supply in which the pressure becomes low is included in the outdoor unit 99 in this heat pump type hot-water supply device. Therefore, the heat exchanger for the heat supply 94 can be installed in an appropriate outside place while keeping heat loss at a low level.

### (Ninth Embodiment)

Next, a refrigerating cycle device according to a ninth embodiment is described in reference to Fig. 13. This refrigerating cycle device is a heat pump type hot-water supply device using a natural refrigerant, such as carbon dioxide, and uses the heat of condensation of the condenser for the heat supply for hot water, as in the eighth embodiment, but is different from the eighth embodiment in that the units have a different configuration and a plurality of hot water tanks are provided.

As shown in Fig. 13, the heat pump type hot-water supply device is provided with a heat supply unit 111 and a hot water unit 121. The heat supply unit 111 is a unit which includes a refrigeration cycle portion, and is provided with a refrigerant circuit in which the refrigerant circulates in the direction of the solid arrows. In the refrigerant circuit, a condenser 112, a heat exchanger for water 113 which releases heat when the refrigerant is condensed and heats water, an expansion valve 114, and a heat exchanger for the heat supply 115 of which the heat source is outside air are arranged in this order and connected to each other. The heat exchanger for the heat supply 115 is provided together with a fan 115a. The refrigerant circuit is filled with a natural refrigerant made of carbon dioxide. This device is operated in a supercritical refrigeration cycle.

The hot water unit 121 includes a hot water circuit portion. In the hot water circuit, as shown by the broken arrows, water circulates through the bottom of the hot water tank 122 on the first stage side, the water circulation pump 123, the heat exchanger for water 113, the upper portion of the hot water tank 124 on the second stage side, the bottom of the hot water tank 124 on the second stage side, the upper portion of the hot water tank 122 on the first stage side and the bottom of the hot water tank 122 on the first stage side in this order. The hot water feeding tube 125 is connected to the upper portion of the hot water tank 124 on the second stage side, and the water supply tube 126 is connected to the bottom of the hot water tank 122 on the first stage side. Water heated by the heat exchanger for water 113 is sent to the upper portion of the hot water tank 124 on the second stage side. In addition, water at the bottom of the hot water tank 122 on the first stage side is sent to the heat exchanger for water 113. As a result, the hot water tank 124 on the second stage side is filled with hot water from the top to the bottom, and after that, the hot water tank 122 on the first stage side is filled from the top to the bottom, that is to say, when the operation is started, only the upper portion of the hot water tank 124 on the second stage side is filled with hot water, and as the operation continues, the entirety of the hot water tank 124 on the second stage side and the entirety of the hot water tank 122 on the first stage side are filled with hot water.

In the present embodiment, water distribution tubes 128 for connecting the hot water unit 121 and the heat supply unit 111 are connected to each other via tube fittings 129. Furthermore, the hot water feeding tube 125 and the water supply tube 126 are also connected to the hot water tank 124 on the second stage side and the hot water tank 122 on the first stage side via tube fittings 130, respectively. The bite type tube connection structure according to the first embodiment is applied in the tube connection portions between the two tube fittings 129 and 130, and concretely, the bite type tube fittings according to the first embodiment are used.

In the hot-water supply device according to the ninth embodiment, as in the heat pump type hot-water supply device according to the eighth embodiment, the refrigerant circuit is filled with refrigerant, such as carbon dioxide, and the heat pump is operated in a supercritical refrigeration cycle, and thus, hot water is gained. In addition, tube fittings 129 and 130 having the bite type tube connection structure according to the first embodiment are used in the hot water circuit. Therefore, a highly reliable device in which there is little leakage of fluid is gained, and the ease of work when connecting tubes increases. In addition, unlike in the eighth embodiment, since a plurality of hot water tanks are provided, the area of the border between the high temperature layer and the low temperature layer in the water becomes small within the hot water tank, and as a result, the heating efficiency becomes high. In addition, the diameter of the body of the hot water tanks can be reduced, and the space for installing hot water tanks can be reduced.

### (Tenth Embodiment)

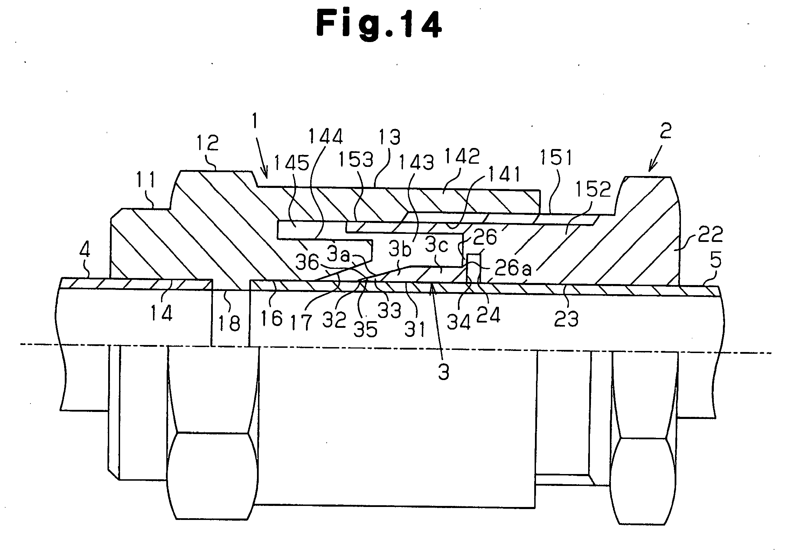

Next, a bite type tube fitting using the bite type tube connection structure according to a tenth embodiment is described in reference to Figs. 14 to 17. In the tenth embodiment, detailed description for portions which are the same as in the first embodiment are omitted.

In the tenth embodiment, the configuration of threads for connecting the fitting main body 1 and the fastening nut 2 is different from in the respective embodiments above. That is to say, in the tenth embodiment, an internal thread is provided on the fitting main body 1 and an external thread is provided on the fastening nut 2.

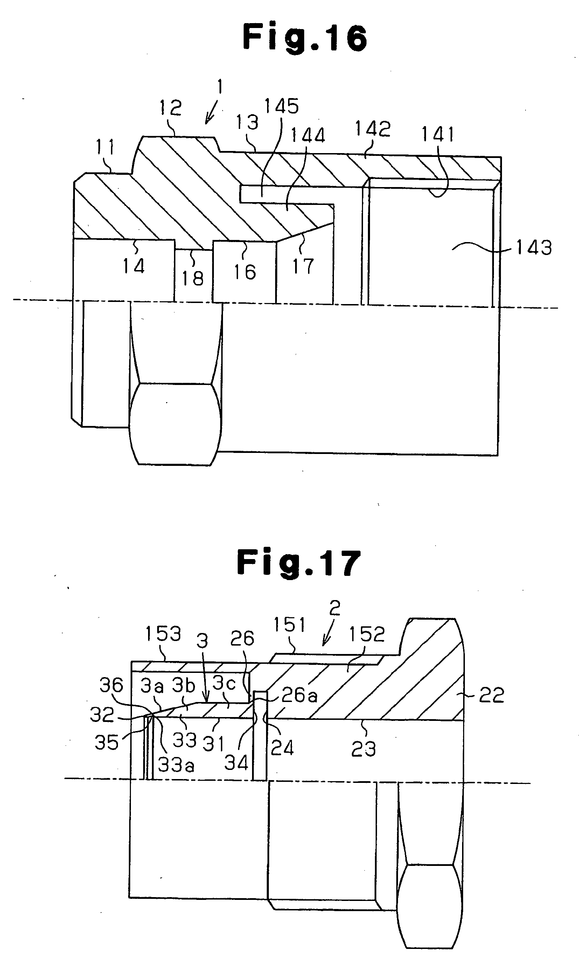

As shown in Figs. 14 and 16, the fitting main body 1 is provided with the socket portion 11 and the nut portion 12, which are substantially the same as in the first embodiment are provided, and a tube connection portion 13 is further provided near the fastening nut 2 of the nut portion 12. The tube connection portion 13 is provided with a cylindrical portion 142, and an internal thread 141 is provided on the internal surface around the cylindrical portion 142. An axis portion 144 which protrudes from the nut portion 12 toward the fastening nut 2 is placed in the space 143 in the cylindrical portion 142. The tube connection opening 16 which extends along the center axis is created in the axis portion 144, and the tapered guiding surface 17 which is the same as in the first embodiment is formed in the vicinity of the opening end of the tube connection opening 16. The distal end of the axis portion 144 is placed substantially in the center of the space 143 in the cylindrical portion 142. Therefore, an annular space 145 is created between the external surface around the axis portion 144 and the internal surface around the cylindrical portion 142.

As shown in Figs. 14 and 17, an external thread 151 for threading into an internal thread 141 in the fitting main body 1 is formed on the external surface around a portion of the side wall 22 of the fastening nut 2, close to the fitting main body 1. That is to say, the external surface around the fastening nut 2 is provided with the external thread shaft portion 152 of the external thread 151. The bite type sleeve 3 is provided on an end surface of the external thread shaft portion 152 close to the fitting main body. The bite type sleeve 3 includes a primary deforming portion 32, a secondary deforming portion 33, a notch 35 which is a right triangle in a cross section, and a tapered surface 3a, which are the same as those used in the first embodiment. The bite type sleeve 3 is connected to the external thread shaft portion 152 via a thin linking portion 26, as in the first embodiment. Thus, the bite type sleeve 3 protrudes from the external thread shaft portion 152, and therefore, the bite type sleeve 3 is easily scratched when the fastening nut 2 is fastened. Regarding this, in the present embodiment, as shown in Fig. 17, the fastening nut 2 is provided with a protective cover 153 for protecting the bite type sleeve 3. The protective cover 153 is a cover in cylindrical form which extends from the external thread shaft portion 152 to the fitting main body 1. The protective cover 153 is formed integrally with the external thread shaft portion 152. The outer diameter of the protective cover 153 is the same as in the external thread shaft portion 152.

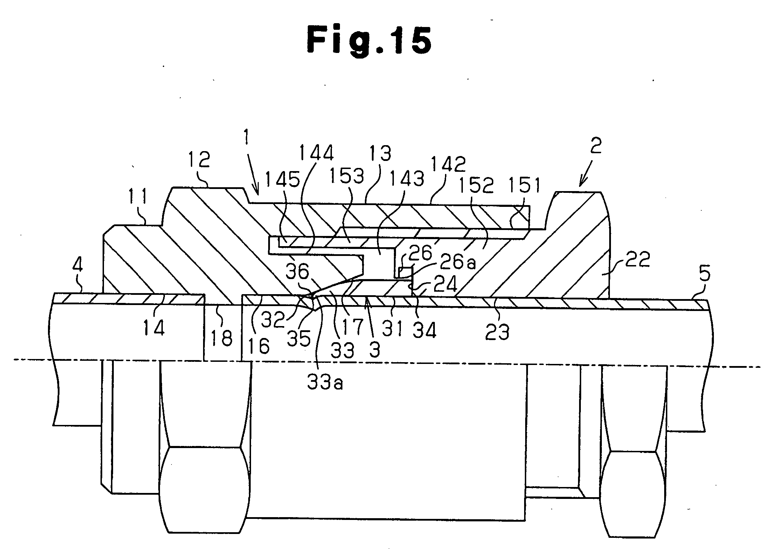

According to this embodiment, first the fastening nut 2 is fastened by hand against the fitting main body 1 from the state shown in Fig. 14. As a result, the primary deforming portion 32 in the bite type sleeve 3 bites into the connection tube 5 or is inserted into the gap between the fitting main body 1 and the connection tube 5 in a wedge-like fashion, and thus, the connection tube 5 is temporarily held. After the connection tube 5 is temporarily held, the fastening nut 2 is fastened against the fitting main body 1 by a fastening tool. As a result, as shown in Fig. 15, the fastening nut 2 approaches the fitting main body 1, and at the same time, the bite type sleeve 3 is separated from the fastening nut 2. In addition, the distal end portion 33a of the secondary deforming portion 33 of the bite type sleeve 3 deforms and bites into the connection tube 5. When the operation of fastening the fastening nut 2 is completed, the protective cover 153 is contained in the space 145 within the fitting main body 1.

The bite type tube connection structure according to the present embodiment is a structure in which the connection tube 5 is removably connected to the tube connection portion 13, as in the first embodiment, and concretely, the fitting main body 1, which has a tube connection opening 16 into which the connection tube 5 is inserted, the fastening nut 2 for fastening the bite type sleeve against the fitting main body 1, and the bite type sleeve 3 in cylindrical form are provided, and the bite type sleeve 3 is formed integrally with the fastening nut 2. The bite type sleeve 3 is formed of a primary deforming portion 32 which is inserted between the connection tube 5 and the tube connection opening 16 as a result of the first pressing force, and a secondary deforming portion 33 which deforms as a result of the second pressing force in the axial direction, which is greater than the first pressing force, and bites into the connection tube 5.

In the bite type tube connection structure according to the tenth embodiment and the bite type tube fittings using the same, the same advantages as in the first embodiment are obtained. In addition, in the tenth embodiment, a protective cover 153 is provided around the external periphery of the bite type sleeve 3, and therefore, the bite type sleeve 3 can be prevented from being scratched when the fastening nut is fastened.

The respective embodiments described above may be modified as follows.

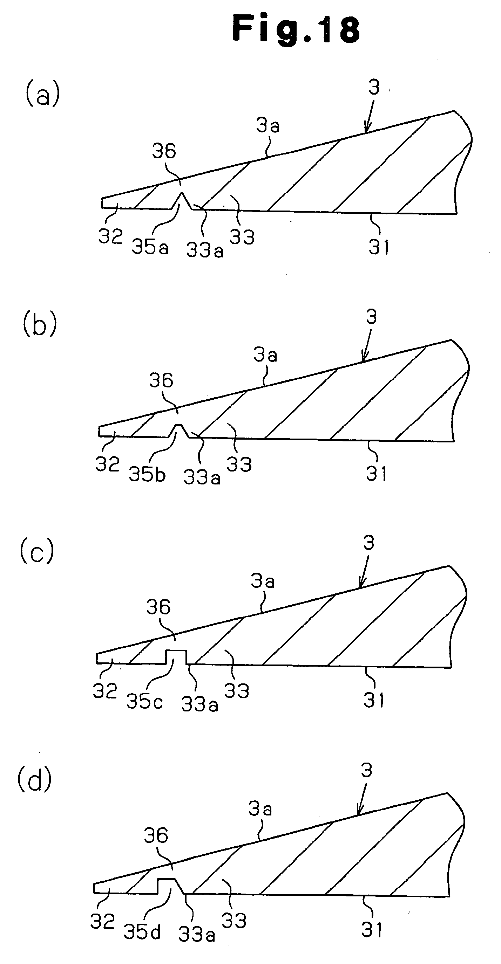

Although in the respective embodiments, the notch 35 in the bite type sleeve 3 is substantially a right triangle in a cross section, the form of the notch 35 in a cross section may be in inverted V-shape as shown in Fig. 18(a), a trapezoid as shown in Figs. 18(b) and 18(d), or a quadrilateral as shown in Fig. 18(c), for example. The border portion between the primary deforming portion 32 and the secondary deforming portion 33 can be easily deformed even with a small notch, for example notch 35a, by sharpening the portion close to the tapered surface 3a in the notch. In addition, in the case where the surface of the notch close to the secondary deforming portion 33 crosses the axis of bite type sleeve 3 at a right angle, as with the notch 35c, the secondary deforming portion 33 can easily bite into the connection tube 5 with the edge portions at a right angle at the front end of the secondary deforming portion 33.

In the fourth to ninth embodiments, the tube connection structure in the second, third or tenth embodiment may be applied in the tube connection portion. In this case also, fluid is prevented from leaking from the tube connection portion and the ease of work when connecting tubes increases.

In the first or tenth embodiment, the size of the thinnest portion 26a of the thin linking portion 26 may be adjusted so that the bite type sleeve 3 is separated from the fastening nut 2 as a result of the first pressing force, before the connection tube 5 is temporarily held. This modification can be applied to the fourth to ninth embodiments, in which the tube connection structure of the first embodiment is applied.

In the first to third and tenth embodiments, tubes of different diameters may be used for the fixed tube 4 and the connection tube 5. This modification may be applied to the fourth, sixth, eighth and ninth embodiments, in which the tube connection structure of the first embodiment is applied.

In the first, second and tenth embodiments, the substantially cylindrical portion 3c of the bite type sleeve 3 need not be in tapered form. That is to say, the external surface around the cylindrical portion 3c may be a surface parallel to the center axis. This modification may be applied to the fourth to ninth embodiments.

The bite type tube connection structure according to the first to third and tenth embodiments may be applied to valves other than the closing valve of the fourth embodiment, that is to say, other valves such as a control valve or a check valve.

The bite type tube connection structure according to the first to third and tenth embodiments may be used in a plurality of tube connection portions. Concretely, it may be applied to tube connection portions having tube fittings in two or more directions. In this case, tube connection portions having the same diameter may be used.

In the refrigerating cycle device in the sixth and seventh embodiments, refrigerants other than HC refrigerant may be used. In the eighth and ninth embodiments, refrigerants other than carbon dioxide may be used.

Although in the refrigerating cycle device in the sixth to ninth embodiments, the tube connection structure according to the first embodiment is applied to the connection of tubes when tubes are assembled, it may be applied to the connection of tubes in devices other than this. For example, a bite type tube fitting having the bite type tube connection structure according to the first embodiment may be used for all of the tubes connected to the hot water tanks 95, 122 and 124, in order to exchange the hot water tanks 95, 122 and 124 in the eighth and ninth embodiments.

The hot-water supply device may be a hot-water supply device other than a heat pump type hot-water supply device, such as a gas fired type hot-water supply device or an electric water heater. The bite type tube connection structure according to the present invention may be applied to water tubes used for such hot-water supply devices.

## Claims

1. A bite type tube connection structure, comprising:
- a main body (1) of a fitting having a tube connection opening (16) into which a connection tube (5) is inserted;
- a fastening part (2) which is fastened to the fitting main body (1); and
- a bite type sleeve (3) in cylindrical form provided between the fitting main body (1) and the fastening part (2),
- the bite type tube connection structure being of the type in which the bite type sleeve (3) is formed of a primary deforming portion (32) and a secondary deforming portion (33), wherein the primary deforming portion (32) either bites into the connection tube (5) or is inserted between the connection tube (5) and the fitting main body (1) in a wedge-like fashion as a result of a first pressing force in the axial direction applied when the fastening part (2) is fastened, and the secondary deforming portion (33) bites into the connection tube (5) as a result of a second pressing force in the axial direction, which is applied when the fastening part (2) is fastened and greater than the first pressing force;
- the fitting main body (1) having a thread around which the fastening part (2) is threaded, and the fastening part (2) being formed of a fastening nut (2) into which the fitting main body (1) is threaded in such a manner that the first pressing force is a pressing force in the axial direction applied when the fastening nut (2) is fastened by hand and the second pressing force is a pressing force in the axial direction applied when the fastening nut (2) is fastened using a fastening tool, and greater than the first pressing force,
- **characterized in that** the bite type sleeve is formed integrally with the fastening nut (2), and the secondary deforming portion (33) is separated from the fastening nut (2) as a result of the pressing force in the axial direction from the fastening nut (2) before biting into the connection tube (5).

2. A bite type tube connection structure, comprising:
- a main body (1) of a fitting having a tube connection opening (16) into which a connection tube (5) is inserted;
- a fastening part (2)which is fastened to the fitting main body (1); and
- a bite type sleeve (3) in cylindrical form provided between the fitting main body (1) and the fastening part (2),
- the bite type tube connection structure being of the type in which the bite type sleeve (3) is formed of a primary deforming (32) portion and a secondary deforming portion (33), wherein the primary deforming portion (32) either bites into the connection tube (5) or is inserted between the connection tube (5) and the fitting main body (1) in a wedge-like fashion as a result of a first pressing force in the axial direction applied when the fastening part (2) is fastened, and the secondary deforming portion (33) bites into the connection tube (5) as a result of a second pressing force in the axial direction, which is applied when the fastening part (2) is fastened and greater than the first pressing force;
- the fitting main body (1) having a thread around which the fastening part (2) is threaded, and the fastening part (2) being formed of a fastening nut (2) into which the fitting main body (1) is threaded in such a manner that the first pressing force is a pressing force in the axial direction applied when the fastening nut (2) is fastened by hand and the second pressing force is a pressing force in the axial direction applied when the fastening nut (2) is fastened using a fastening tool, and greater than the first pressing force,
- **characterized in that** the bite type sleeve is formed integrally with the fitting main body (1) and separated from the fitting main body (1) as a result of the pressing force in the axial direction from the fastening nut (2) before the secondary deforming portion bites into the connection tube (5).

3. The bite type tube connection structure according to claim 1 or 2, **characterized in that** the thickness (t2) of the primary deforming portion (32) is less than the thickness (t1) of a distal end of the secondary deforming portion (33).

4. The bite type tube connection structure according to claim 1, **characterized in that** the primary deforming portion (32) is formed integrally with a distal end portion of the secondary deforming portion (33), and the secondary deforming portion (33) is linked to an inner wall of the fastening nut (2) via a thin linking portion (26), and the bite type sleeve (3) is formed integrally with the fastening nut (2).

5. The bite type tube connection structure according to any of the claims 2 to 4, **characterized in that** the primary deforming portion (32) is formed integrally with a distal end portion of the secondary deforming portion (33) and the secondary deforming portion (33) is joined to the joint surface, which is substantially parallel to the center axis of the bite type sleeve (3), in the vicinity of the tube connection opening of the fitting main body (1).

6. The bite type tube connection structure according to any of the claims 1 to 5, **characterized in that** a thin portion (36) is formed in the border portion between the primary deforming portion (32) and the secondary deforming portion (33).

7. The bite type tube connection structure according to claim 6, **characterized in that** the thickness (t3) of the thin portion (36) is less than the thickness (t2) of a distal end of the primary deforming portion (32).

8. The bite type tube connection structure according to claim 6 or 7, **characterized in that** a tapered guiding surface (17) for guiding a distal end portion of the secondary deforming portion (33) toward the center axis of the connection tube (5) is provided in the vicinity of the tube connection opening (16) of the fitting main body (1), and the bite type sleeve (3) has a tapered surface (3a) which makes contact with the tapered guiding surface (17), a through hole (31) into which the connection tube (5) is inserted, and a notch (35) provided in a border portion between the secondary deforming portion (33) and the primary deforming portion (32), wherein the notch (35) forms a thin portion (36) between the primary deforming portion (32) and the secondary deforming portion (33).

9. The bite type tube connection structure according to claim 8, **characterized in that** the notch (35) has a sharp distal end in a longitudinal cross section.

10. The bite type tube connection structure according to claim 9, **characterized in that** the notch (35) is substantially a right triangle in a longitudinal cross section, and the surface of the notch (35) close to the secondary deforming portion (33) is perpendicular to the center axis of the bite type sleeve (3).

11. A tube fitting comprising at least two tube connection portions extending in different directions, **characterized in that** the bite type tube connection structure according to any one of claims 1 to 10 is used in one of the tube connection portions (55).

12. A valve comprising at least one tube connection portion (13), **characterized in that** the bite type tube connection structure according to any one of claims 1 to 10 is used in the tube connection portion (13).

13. A refrigerating cycle device comprising a refrigerant circuit, **characterized in that** the refrigerant circuit is provided with at least one tube connection portion (13) to which a refrigerant tube is removably connected, and the bite type tube connection structure according to any one of claims 1 to 10 is used in the tube connection portion (13).

14. A hot-water supply device **characterized in that** the bite type tube connection structure according to any one of claims 1 to 10 is used in a tube connection portion (13) which is provided in a circuit through which water circulates.

15. A bite type tube connection method, **characterized in that** a main body (1) of a fitting having the bite type tube connection structure according to any one of claims 1 to 10, a fastening nut (2), and a bite type sleeve (3) in cylindrical form are prepared, the connection tube is fitted into the fastening nut (2) and the bite type sleeve (3), an end portion of the connection tube (5) that is fitted into the fastening nut (2) and the bite type sleeve (3) is inserted into a tube connection opening (16) of the fitting main body (1), a first pressing force is applied by fastening the fastening nut (2) by hand while holding the connection tube in a predetermined location within the fitting main body (1), a primary deforming portion (32) of the bite type sleeve (3) bites into the connection tube or is inserted between the fitting main body (1) and the connection tube (5) in a wedge-like fashion as a result of the first pressing force, so that the connection tube is temporarily held against the fitting main body (1), a second pressing force which is greater than the first pressing force is applied by fastening the fastening nut (2) against the fitting main body (1) with a predetermined torque using a fastening tool, a secondary deforming portion (33) of the bite type sleeve (3) bites into the connection tube as a result of the second pressing force, so that the connection tube (5) is secured to the fitting main body (1).

## Patentansprüche

1. Verzahnungstyp-Rohrverbindungs-Struktur, welche umfasst:
- einen Grundkörper (1) eines Anschlussstücks mit einer Rohrverbindungsöffnung (16) in die ein Verbindungsrohr (5) eingeführt wird;
- ein Befestigungsteil (2), welches an dem Anschlussstück-Grundkörper (1) befestigt ist; und
- eine Verzahnungstyp-Muffe (3) in zylindrischer Form, welche zwischen dem Anschlussstück-Grundkörper (1) und dem Befestigungsteil (2) angeordnet ist,
- wobei die Verzahnungstyp-Rohrverbindungs-Struktur so ausgestaltet ist, dass die Verzahnungstyp-Muffe (3) aus einem primären Deformationsbereich (32) und einem sekundären Deformationsbereich (33) gebildet wird, wobei der primäre Deformationsbereich (32) entweder in das Verbindungsrohr (5) gepresst wird oder zwischen das Verbindungsrohr (5) und den Anschlussstück-Grundkörper (1) keilartig eingebracht wird, als Ergebnis einer ersten Presskraft, welche in axialer Richtung aufgebracht wird, wenn das Befestigungsteil (2) befestigt wird, und der sekundäre Deformationsbereich (33) in das Verbindungsrohr (5) gepresst wird, als Ergebnis einer zweiten Presskraft in axialer Richtung, die aufgebracht wird, wenn das Befestigungsteil (2) befestigt wird, und größer ist, als die erste Presskraft;
- wobei der Anschlussstück-Grundkörper (1) ein Gewinde aufweist, auf das das Befestigungsteil (2) aufgeschraubt wird und der Befestigungsteil (2) als eine Befestigungsgewindebüchse (2) ausgebildet ist in die der Anschlussstück-Grundkörper (1) eingeschraubt wird, so dass die erste Presskraft eine Presskraft ist, die in axialer Richtung aufgewandt wird, wenn die Befestigungsgewindebüchse (2) von Hand befestigt wird und die zweite Presskraft eine Presskraft in axialer Richtung ist, welche aufgewandt wird, wenn die Befestigungsgewindebüchse (2) unter Benutzung eines Befestigungswerkzeugs befestigt wird, und größer ist, als die erste Presskraft,
- **dadurch gekennzeichnet, dass** die Verzahnungstyp-Muffe integral mit der Befestigungsgewindebüchse (2) geformt ist, und der sekundäre Deformationsbereich (33) von der Befestigungsgewindebüchse (2) abgetrennt wird, als Ergebnis der Presskraft in axialer Richtung von der Befestigungsgewindebüchse (2), bevor sie in das Befestigungsrohr (5) gepresst wird.

2. Eine Verzahnungstyp-Rohrverbindungs-Struktur, welche umfasst:
- einen Grundkörper (1) eines Anschlussstücks mit einer Rohrverbindungsöffnung (16), in die ein Verbindungsrohr (5) eingeführt wird;
- ein Befestigungsteil (2), welches an dem Anschlussstück-Grundkörper (1) befestigt ist; und
- eine Verzahnungstyp-Muffe (3) in zylindrischer Form, welche zwischen dem Anschlussstück-Grundkörper (1) und dem Befestigungsteil (2) angeordnet ist,
- wobei die Verzahnungstyp-Rohrverbindungs-Struktur so ausgestaltet ist, dass die Verzahnungstyp-Muffe (3) aus einem primären Deformationsbereich (32) und einem sekundären Deformationsbereich (33) gebildet wird, wobei der primäre Deformationsbereich (32) entweder in das Verbindungsrohr (5) gepresst wird oder zwischen das Verbindungsrohr (5) und den Anschlussstück-Grundkörper (1) keilartig eingebracht wird, als Ergebnis einer ersten Presskraft, welche in axialer Richtung aufgebracht wird, wenn das Befestigungsteil (2) befestigt wird, und der sekundäre Deformationsbereich (33) in das Verbindungsrohr (5) gepresst wird, als Ergebnis einer zweiten Presskraft in axialer Richtung, die aufgebracht wird, wenn das Befestigungsteil (2) befestigt wird, und größer ist, als die erste Presskraft;
- wobei der Anschlussstück-Grundkörper (1) ein Gewinde aufweist, auf das das Befestigungsteil (2) aufgeschraubt wird und der Befestigungsteil (2) als eine Befestigungsgewindebüchse (2) ausgebildet ist, in die der Anschlussstück-Grundkörper (1) eingeschraubt wird, so dass die erste Presskraft eine Presskraft ist, die in axialer Richtung aufgewandt wird, wenn die Befestigungsgewindebüchse (2) mit der Hand befestigt wird und die zweite Presskraft eine Presskraft in axialer Richtung ist, welche aufgewandt wird, wenn die Befestigungsgewindebüchse (2) unter Benutzung eines Befestigungswerkzeugs befestigt wird, und größer ist, als die erste Presskraft,
- **dadurch gekennzeichnet, dass** die Verzahnungstyp-Muffe integral mit dem Anschlussstück-Grundkörper (1) geformt ist und von dem Anschlussstück-Grundkörper (1) abgetrennt wird, als Ergebnis der Presskraft in axialer Richtung von der Befestigungsgewindebüchse (2), bevor der sekundäre Deformationsbereich in das Verbindungsrohr (5) gepresst wird.

3. Verzahnungstyp-Rohrverbindungs-Struktur gemäß Anspruch 1 oder 2, **dadurch gekennzeichnet, dass** die Dicke (t2) des primären Deformationsbereichs (32) geringer ist, als die Dicke (t1) des distalen Endes des sekundären Deformationsbereichs (33).

4. Verzahnungstyp-Rohrverbindungs-Struktur gemäß Anspruch 1, **dadurch gekennzeichnet, dass** der primäre Deformationsbereich (32) integral mit einem distalen Endbereich des sekundären Deformationsbereichs (33) ausgeformt ist, und der sekundäre Deformationsbereich (33) mit einer inneren Wand der Befestigungsgewindebüchse (2) über einen dünnen Verbindungsbereich (26) verbunden ist und die Verzahnungstyp-Muffe (3) integral mit der Befestigungsgewindebüchse (2) geformt ist.

5. Verzahnungstyp-Rohrverbindungs-Struktur gemäß einem der Ansprüche 2 bis 4, **dadurch gekennzeichnet, dass** der primäre Deformationsbereich (32) integral mit einem distalen Endbereich des sekundären Deformationsbereichs (33) ausgeformt ist und der sekundäre Deformationsbereich (33) mit der Verbindungsfläche verbunden ist, welche im Wesentlichen parallel zu der Mittelachse der Verzahnungstyp-Muffe (3) ist, in der Nähe der Rohrverbindungsöffnung des Verbindungsstück-Grundkörpers (1).

6. Verzahnungstyp-Rohrverbindungs-Struktur gemäß einem der Ansprüche 1 bis 5, **dadurch gekennzeichnet, dass** ein dünner Bereich (36) im Grenzbereich zwischen dem primären Deformationsbereich (32) und dem sekundären Deformationsbereich (33) ausgeformt ist.

7. Verzahnungstyp-Rohrverbindungs-Struktur gemäß Anspruch 6, **dadurch gekennzeichnet, dass** die Dicke (t3) des dünnen Bereichs (36) kleiner ist, als die Dicke (t2) eines distalen Endes des primären Deformationsbereichs (32).

8. Verzahnungstyp-Rohrverbindungs-Struktur gemäß Anspruch 6 oder 7, **dadurch gekennzeichnet, dass** eine konische Führungsoberfläche (17) zum Führen eines distalen Endbereichs des sekundären Deformationsbereichs (33) in Richtung der Mittelachse des Verbindungsrohrs (5), in der Nähe der Rohrverbindungsöffnung (16) des Anschlussstücks-Grundkörpers (1), vorgesehen ist, und die Verzahnungstyp-Muffe (3) eine keilförmige Oberfläche (3a) aufweist, die mit der konischen Führungsoberfläche (17) in Kontakt tritt, eine Durchgangsöffnung (31), in die das Verbindungsrohr (5) eingebracht wird, und eine Nut (35), welche in einem Grenzbereich zwischen dem sekundären Deformationsbereich (33) und dem primären Deformationsbereich (32) angeordnet ist, wobei die Nut (35) einen dünnen Bereich (36) zwischen dem primären Deformationsbereich (32) und dem sekundären Deformationsbereich (33) formt.

9. Verzahnungstyp-Rohrverbindungs-Struktur gemäß Anspruch 8, **dadurch gekennzeichnet, dass** die Nut (35) in einem longitudinalen Querschnitt ein scharfkantiges distales Ende aufweist.

10. Verzahnungstyp-Rohrverbindungs-Struktur gemäß Anspruch 9, **dadurch gekennzeichnet, dass** die Nut (35) in einem longitudinalen Querschnitt im Wesentlichen ein rechtwinkliges Dreieck ist, und die Oberfläche der Nut (35) in der Nähe des sekundären Deformationsbereichs (33) im rechten Winkel zu der Mittelachse der Verzahnungstyp-Muffe (3) steht.

11. Rohrverbindungsstück mit zumindest zwei Rohrverbindungsbereichen, die sich in verschiedene Richtungen erstrecken, **dadurch gekennzeichnet, dass** die Verzahnungstyp-Rohrverbindungs-Struktur gemäß irgendeinem der Ansprüche 1 bis 10 in einem der Rohrverbindungsbereiche (55) verwendet wird.

12. Ventil mit zumindest einem Rohrverbindungsbereich (13), **dadurch gekennzeichnet, dass** die Verzahnungstyp-Rohrverbindungs-Struktur gemäß irgendeinem der Ansprüche 1 bis 10 in dem Rohrverbindungsbereich (13) verwendet wird.

13. Kühlkreislaufvorrichtung mit einem Kühlkreislauf, **dadurch gekennzeichnet, dass** der Kühlkreislauf mit zumindest einem Rohrverbindungsbereich (13) versehen ist, mit dem ein Kühlmittelrohr trennbar verbunden ist, und die Verzahnungstyp-Rohrverbindungs-Struktur gemäß irgendeinem der Ansprüche 1 bis 10 in dem Rohrverbindungsbereich (13) verwendet wird.

14. Warmwasserversorgungsvorrichtung, **dadurch gekennzeichnet, dass** die Verzahnungstyp-Rohrverbindungs-Struktur gemäß irgendeinem der Ansprüche 1 bis 10 in einem Rohrverbindungsbereich (13) verwendet wird, welcher in einem Kreislauf, durch den Wasser zirkuliert, bereitgestellt ist.

15. Verzahnungstyp-Rohrverbindungs-Verfahren, **dadurch gekennzeichnet, dass** in einem Grundkörper (1) eines Anschlussteils mit der Verzahnungstyp-Rohrverbindungs-Struktur gemäß irgendeinem der Ansprüche 1 bis 10 eine Befestigungsgewindebüchse (2) und eine Verzahnungstyp-Muffe (3) in zylindrischer Form vorbereitet sind, das Verbindungsrohr in die Befestigungsgewindebüchse (2) und die Verzahnungstyp-Muffe (3) eingepasst wird, ein Endbereich des Verbindungsrohrs (5), das in die Befestigungsgewindebüchse (2) und die Verzahnungstyp-Muffe (3) eingepasst ist, in eine Rohrverbindungsöffnung (16) des Anschlussstücks-Grundkörpers (1) eingebracht wird, eine erste Presskraft beim händischen Befestigen der Befestigungsgewindebüchse (2) aufgebracht wird, während das Verbindungsrohr in einer vorbestimmten Position in dem Anschlussstück-Grundkörper (1) gehalten wird, ein primärer Deformationsbereich (32) der Verzahnungstyp-Muffe (3) in das Verbindungsrohr gepresst wird oder zwischen den Anschlussstück-Grundkörper (1) und das Verbindungsrohr keilförmig eingebracht wird, als Ergebnis der ersten Presskraft, so dass das Verbindungsrohr zeitweise gegen den Anschlussstück-Grundkörper (1) gehalten wird, eine zweite Presskraft, welche größer ist, als die erste Presskraft durch Befestigen der Befestigungsgewindebüchse (2) an dem Anschlussstück-Grundkörper (1) mit einem vorbestimmten Drehmoment unter Benutzung eines Befestigungswerkzeugs aufgewendet wird, ein sekundärer Deformationsbereich (33) der Verzahnungstyp-Muffe (3) in das Verbindungsrohr gepresst wird, als ein Ergebnis der zweiten Presskraft, so dass das Verbindungsrohr (5) an dem Verbindungsgrundkörper (1) befestigt wird.

## Revendications

1. Structure de raccordement de tubes à virole, comprenant:
- le corps principal (1) d'un raccord qui comporte une ouverture (16) pour le raccordement de tubes dans laquelle est inséré un tube de raccordement (5);
- un élément de fixation (2) qui est fixé au corps principal (1) du raccord; et
- un manchon à virole (3) de forme cylindrique qui est prévu entre le corps principal (1) du raccord et l'élément de fixation (2),
- la structure de raccordement de tubes à virole étant du type dans lequel le manchon à virole (3) est constitué d'une partie primaire qui se déforme (32) et d'une partie secondaire qui se déforme (33), **caractérisée en ce que** la partie primaire qui se déforme (32) agrippe le tube de raccordement (5) ou bien elle est insérée entre le tube de raccordement (5) et le corps principal (1) du raccord d'une manière oblique à la suite d'une première force de pression dans le sens axial qui est exercée lorsque l'élément de fixation (2) est serré, et **en ce que** la partie secondaire qui se déforme (33) agrippe le tube de raccordement (5) à la suite d'une deuxième force de pression dans le sens axial qui est exercée lorsque l'élément de fixation (2) est serré, et qui est supérieure à la première force de pression;
- le corps principal (1) du raccord comportant un filetage autour duquel l'élément de fixation (2) est fileté, et l'élément de fixation (2) étant constitué d'un écrou de fixation (2) dans lequel le corps principal (1) du raccord est fileté de telle manière que la première force de pression est une force de pression dans le sens axial qui est exercée lorsque l'écrou de fixation (2) est serré à la main, et de manière que la deuxième force de pression est une force de pression dans le sens axial qui est exercée lorsque l'écrou de fixation (2) est serré au moyen d'un outil de fixation, et qui est supérieure à la première force de pression;
- **caractérisée en ce que** le manchon à virole est formé intégralement avec l'écrou de fixation (2), et **en ce que** la partie secondaire qui se déforme (33) se trouve séparée de l'écrou de fixation (2) à la suite de la force de pression dans le sens axial exercée par l'écrou de fixation (2), avant d'agripper le tube de raccordement (5).

2. Structure de raccordement de tubes à virole, comportant:
- le corps principal (1) d'un raccord qui comporte une ouverture (16) pour le raccordement de tubes dans laquelle est inséré un tube de raccordement (5);
- un élément de fixation (2) qui est fixé au corps principal (1) du raccord; et
- un manchon à virole (3) de forme cylindrique qui est prévu entre le corps principal (1) du raccord et l'élément de fixation (2),
- la structure de raccordement de tubes à virole étant du type dans lequel le manchon à virole (3) est constitué d'une partie primaire qui se déforme (32) et d'une partie secondaire qui se déforme (33), **caractérisée en ce que** la partie primaire qui se déforme (32) agrippe le tube de raccordement (5) ou bien elle est insérée entre le tube de raccordement (5) et le corps principal (1) du raccord d'une manière oblique à la suite d'une première force de pression dans le sens axial qui est exercée lorsque l'élément de fixation (2) est serré, et **en ce que** la partie secondaire qui se déforme (33) agrippe le tube de raccordement (5) à la suite d'une deuxième force de pression dans le sens axial qui est exercée lorsque l'élément de fixation (2) est serré, et qui est supérieure à la première force de pression;
- le corps principal (1) du raccord comportant un filetage autour duquel l'élément de fixation (2) est fileté, et l'élément de fixation (2) étant constitué d'un écrou de fixation (2) dans lequel le corps principal (1) du raccord est fileté de telle manière que la première force de pression est une force de pression dans le sens axial qui est exercée lorsque l'écrou de fixation (2) est serré à la main, et de manière que la deuxième force de pression est une force de pression dans le sens axial qui est exercée lorsque l'écrou de fixation (2) est serré au moyen d'un outil de fixation, et qui est supérieure à la première force de pression;
- **caractérisée en ce que** le manchon à virole est formé intégralement avec le corps principal (1) et se trouve séparé du corps principal (1) du raccord à la suite de la force de pression dans le sens axial exercée par l'écrou de fixation (2) avant que la partie secondaire qui se déforme agrippe le tube de raccordement (5).

3. Structure de raccordement de tubes à virole selon la revendication 1 ou 2, **caractérisée en ce que** l'épaisseur (t2) de la partie primaire qui se déforme (32) est inférieure à l'épaisseur (t1) de l'extrémité distale de la partie secondaire qui se déforme (33).

4. Structure de raccordement de tubes à virole selon la revendication 1, **caractérisée en ce que** la partie primaire qui se déforme (32) est formée intégralement avec une extrémité distale de la partie secondaire qui se déforme (33), **en ce que** la partie secondaire qui se déforme (33) est raccordée à une paroi interne de l'écrou de fixation (2) au moyen d'un élément de raccordement mince (26), et **en ce que** le manchon à virole (3) est formé intégralement avec l'écrou de fixation (2).

5. Structure de raccordement de tubes à virole selon l'une quelconque des revendications 2 à 4, **caractérisée en ce que** la partie primaire qui se déforme (32) est formée intégralement avec une extrémité distale de la partie secondaire qui se déforme (33), et **en ce que** la partie secondaire qui se déforme (33) est raccordée à la surface de contact, qui est essentiellement parallèle à l'axe central du manchon à virole (3), à proximité de l'ouverture pour le raccordement de tubes du corps principal (1) du raccord.

6. Structure de raccordement de tubes à virole selon l'une quelconque des revendications 1 à 5, **caractérisée en ce qu'**une partie mince (36) est formée en bordure de la zone entre la partie primaire qui se déforme (32) et la partie secondaire qui se déforme (33).

7. Structure de raccordement de tubes à virole selon la revendication 6, **caractérisée en ce que** l'épaisseur (t3) de la partie mince (36) est inférieure à l'épaisseur (t2) d'une extrémité distale de la partie primaire qui se déforme (32).

8. Structure de raccordement de tubes à virole selon la revendication 6 ou 7, **caractérisée en ce qu'**une surface de guidage conique (17), servant à guider une extrémité distale de la partie secondaire qui se déforme (33) vers l'axe central du tube de raccordement (5), est prévue à proximité de l'ouverture (16) pour le raccordement de tubes dans le corps principal (1) du raccord, et **en ce que** le manchon à virole (3) comporte une surface conique (3a) qui entre en contact avec la surface de guidage conique (17), un trou débouchant (31) dans lequel est inséré le tube de raccordement (5), et une encoche (35) prévue en bordure entre la partie secondaire qui se déforme (33) et la partie primaire qui se déforme (32), **caractérisée en ce que** l'encoche (35) forme une partie mince (36) entre la partie primaire qui se déforme (32) et la partie secondaire qui se déforme (33).

9. Structure de raccordement de tubes à virole selon la revendication 8, **caractérisée en ce que** l'encoche (35) comporte une extrémité distale pointue vue en coupe transversale longitudinale.

10. Structure de raccordement de tubes à virole selon la revendication 9, **caractérisée en ce que** l'encoche (35) est essentiellement un triangle rectangle vu en coupe transversale longitudinale, et **en ce que** la surface de l'encoche (35) à proximité de la partie secondaire qui se déforme (33) est perpendiculaire à l'axe central du manchon à virole (3).

11. Raccord de tubes comportant au moins deux éléments de raccordement de tubes s'étendant dans des sens différents, **caractérisé en ce que** la structure de raccordement de tubes à virole, selon l'une quelconque des revendications 1 à 10, est utilisée dans l'un des éléments de raccordement de tubes (55).

12. Vanne comportant au moins un élément de raccordement de tubes (13), **caractérisée en ce que** la structure de raccordement de tubes à virole, selon l'une quelconque des revendications 1 à 10, est utilisée dans l'élément de raccordement de tubes (13).

13. Dispositif à cycle frigorifique comprenant un circuit à réfrigérant, **caractérisé en ce que** le circuit à réfrigérant est doté d'au moins un élément de raccordement de tubes (13) auquel est raccordé de manière amovible un tube à réfrigérant, et **en ce que** la structure de raccordement de tubes à virole, selon l'une quelconque des revendications 1 à 10, est utilisée dans l'élément de raccordement de tubes (13).

14. Appareil d'approvisionnement en eau chaude **caractérisé en ce que** la structure de raccordement de tubes à virole, selon l'une quelconque des revendications 1 à 10, est utilisée dans un élément de raccordement de tubes (13) qui est installé dans un circuit à travers lequel l'eau circule.

15. Procédé de raccordement de tubes à virole **caractérisé en ce que** le corps principal (1) d'un raccord doté de la structure de raccordement de tubes à virole, selon l'une quelconque des revendications 1 à 10, un écrou de fixation (2) et un manchon à virole (3) de forme cylindrique sont préparés, le tube de raccordement est monté dans l'écrou de fixation (2) et le manchon à virole (3), une extrémité du tube de raccordement (5) est montée dans l'écrou de fixation (2) et le manchon à virole (3) est inséré dans une ouverture (16) pour le raccordement de tubes dans le corps principal (1) du raccord, une première force de pression est exercée en serrant l'écrou de fixation (2) à la main tout en gardant le tube de raccordement dans un endroit prédéterminé à l'intérieur du corps principal (1) du raccord, une partie primaire qui se déforme (32) du manchon à virole (3) agrippe le tube de raccordement, ou bien elle est insérée entre le corps principal (1) du raccord et le tube de raccordement (5) d'une manière oblique à la suite de la première force de pression, de telle manière que le tube de raccordement se trouve tenu temporairement contre le corps principal (1) du raccord, une deuxième force de pression qui est supérieure à la première force de pression est exercée en serrant l'écrou de fixation (2) contre le corps principal (1) du raccord avec un moment de torsion prédéterminé au moyen d'un outil de fixation, une partie secondaire qui se déforme (33) du manchon à virole (3) agrippe le tube de raccordement à la suite de la deuxième force de pression, de telle manière que le tube de raccordement (5) se trouve fixé au corps principal (1) du raccord.
